(19) 

**Europäisches Patentamt**
**European Patent Office**
**Office européen des brevets**

(11) **EP 4 568 136 A2**

(12) **EUROPEAN PATENT APPLICATION**

(43) Date of publication:
**11.06.2025 Bulletin 2025/24**

(21) Application number: **24218009.9**

(22) Date of filing: **06.12.2024**

(51) International Patent Classification (IPC):
**H04B 7/185** (2006.01)

(52) Cooperative Patent Classification (CPC):
**H04B 7/18513; H04B 7/18519; H04B 7/18543**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.12.2023 KR 20230176046**
**20.11.2024 KR 20240166762**

(71) Applicant: **Thinkware Corporation**
**Seongnam-si, Gyeonggi-do 13493 (KR)**

(72) Inventors:
 • **HAN, Taekyu**
  **Seongnam-si, Gyeonggi-do (KR)**
 • **LIM, Donghee**
  **Seongnam-si, Gyeonggi-do (KR)**
 • **KIM, Daewon**
  **Seongnam-si, Gyeonggi-do (KR)**

(74) Representative: **BCKIP Part mbB**
**MK1**
**Landsbergerstraße 98, 3.Stock**
**80339 München (DE)**

(54) **APPARATUS AND METHOD FOR POWER SAVING IN NON-TERRESTRIAL NETWORK**

(57)    In embodiments, an apparatus of a satellite for providing a non-terrestrial network (NTN) access is provided. The apparatus includes memory storing instructions, at least one processor, and at least one transceiver. The instructions, when executed by the at least one processor, cause the apparatus to transmit, to a terminal through the at least one transceiver, a message including information indicating whether transform precoding of downlink transmission is activated, generate downlink signals based on the information, and transmit, to the terminal through the at least one transceiver, the downlink signals. In a case that the information indicates that the transform precoding is activated, the downlink signals are generated through discrete a fourier transform-spreading (DFT-S) orthogonal frequency division multiplexing (OFDM) scheme, and in a case that the information does not indicate that the transform precoding is activated, the downlink signals are generated through a cyclic prefix (CP)-OFDM scheme.

**EP 4 568 136 A2**

**Description**

**[Technical Field]**

The present disclosure generally relates to a non-terrestrial network (NTN) that provides a wireless communication service through a satellite located in an orbit of the earth or an aerial platform flying at high altitude, instead of a base station on the ground, and more particularly, relates to an apparatus and a method for power saving in the non-terrestrial network.

**[Background Art]**

In order to complement a terrestrial network that provides a wireless communication system, a non-terrestrial network (NTN) has been introduced. The non-terrestrial network may provide a communication service even in an area where the terrestrial network is difficult to build or in a disaster situation. In addition, due to a recent decrease in a satellite launch cost, an access network environment may be provided efficiently.

**[Disclosure]**

**[Technical Solution]**

In embodiments, an apparatus of a satellite for providing a non-terrestrial network (NTN) access is provided. The apparatus may comprise memory storing instructions, at least one processor, and at least one transceiver. The instructions, when executed by the at least one processor, may cause the apparatus to transmit, to a terminal through the at least one transceiver, a message including information indicating whether transform precoding of downlink transmission is activated, generate downlink signals based on the information, and transmit, to the terminal through the at least one transceiver, the downlink signals. In a case that the information indicates that the transform precoding is activated, the downlink signals may be generated through a discrete fourier transform-spreading (DFT-S) orthogonal frequency division multiplexing (OFDM) scheme, and in a case that the information does not indicate that the transform precoding is activated, the downlink signals may be generated through a cyclic prefix (CP)-OFDM scheme.

In embodiments, a terminal for communicating with a satellite in a non-terrestrial network (NTN) access is provided. The terminal may comprise memory storing instructions, at least one processor, and at least one transceiver. The instructions, when executed by the at least one processor, may cause the terminal to receive, from the satellite through the at least one transceiver, a message including information indicating whether transform precoding of downlink transmission is activated and receive, from the satellite through the at least one transceiver, downlink signals based on the information. In a case that the information indicates that the transform precoding is activated, the downlink signals may be received through a discrete fourier transform-spreading (DFT-S) orthogonal frequency division multiplexing (OFDM) scheme. In a case that the information does not indicate that the transform precoding is activated, the downlink signals may be received through a cyclic prefix (CP)-OFDM scheme.

In embodiments, a network apparatus for performing a communication with a satellite for providing a non-terrestrial network (NTN) access is provided. The network apparatus may comprise memory storing instructions, at least one processor, and at least one transceiver. The instructions, when executed by the at least one processor, may cause the network apparatus to identify a plurality of satellites corresponding to a sector related to a specific area, identify a first satellite to be deactivated among the plurality of satellites, based on prediction information related to a specific time, and transmit, to the first satellite through the at least one transceiver, a message for indicating deactivation of the first satellite.

In embodiments, an apparatus of a satellite for providing a non-terrestrial network (NTN) access is provided. The apparatus may comprise memory storing instructions, at least one processor, and at least one transceiver. The instructions, when executed by the at least one processor, may cause the satellite to receive, from a network apparatus through the at least one transceiver, a message for indicating deactivation of the satellite, and in response to the message, deactivate at least one of components of the satellite. The deactivation of the satellite may be associated with a specific area and a specific time.

**[Description of the Drawings]**

FIG. 1 illustrates a wireless communication system.
FIGS. 2A and 2B illustrate an example of a non-terrestrial network (NTN).
FIG. 3A illustrates an example of a control plane (C-plane).

FIG. 3B illustrates an example of a user plane (U-plane).
FIG. 4 illustrates an example of a resource structure in a time-frequency domain in a wireless communication system.
FIG. 5 illustrates an example of a network structure for an NTN.
FIG. 6A illustrates an example of a control plane of a regenerative satellite.
FIG. 6B illustrates an example of a user plane of a regenerative satellite.
FIG. 7 illustrates an example of transform precoding.
FIG. 8 illustrates signaling for downlink transmission using transform precoding.
FIG. 9A illustrates an example of signaling through an NG interface in an NTN.
FIG. 9B illustrates an example of signaling through an F1 interface in an NTN.
FIG. 10 illustrates an example of a selection procedure of an inactive satellite.
FIG. 11A illustrates an example of signaling through an NG interface for indicating an inactive satellite.
FIG. 11B illustrates an example of signaling through an F1 interface for indicating an inactive satellite.
FIG. 12 illustrates an example of signaling through an XN interface for indicating an inactive satellite.
FIG. 13 illustrates an example of components of a satellite.
FIG. 14 illustrates an example of components of a terminal.

**[Mode for Invention]**

Terms used in the present disclosure are used only to describe a specific embodiment, and may not be intended to limit scope of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a signal (e.g., a signal, information, a message, or signaling), terms referring to a resource (e.g., a symbol, a slot, a subframe, a radio frame, a subcarrier, a resource element (RE), a resource block (RB), a bandwidth part (BWP), or an occasion), terms referring for a calculation state (e.g., a step, an operation, or a procedure), terms referring to data (e.g., a packet, a user stream, information, a bit, a symbol, or a codeword), terms referring to a channel, terms referring to a network entity, terms referring to a device component, and the like, used in the following description are exemplified for convenience of explanation. Therefore, the present disclosure is not limited to terms to be described below, and another term having an equivalent technical meaning may be used.

In the following description, a physical channel and a signal may be used interchangeably with data or a control signal. For example, a physical downlink shared channel (PDSCH) is a term referring to a physical channel through which data is transmitted, but the PDSCH may also be used to refer to data. That is, in the present disclosure, an expression 'transmitting a physical channel' may be interpreted equally to an expression 'transmitting data or a signal through a physical channel'.

Hereinafter, in the present disclosure, upper signaling indicates a signal transmission method transmitted from a base station to a terminal using a downlink data channel of a physical layer or from a terminal to the base station using an uplink data channel of a physical layer. The upper signaling may be understood as radio resource control (RRC) signaling or a MAC control element (hereinafter, 'CE").

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' means at least one of elements from A (including A) to B (including B). Hereinafter, 'C' and/or 'D' means that at least one of 'C' or 'D', that is, {'C', 'D', 'C' and 'D'}.

In the present disclosure, a signal quality may be, for example, at least one of reference signal received power (RSRP), beam reference signal received power (BRSRP), a reference signal received quality (RSRQ), a received signal strength indicator (RSSI), a signal to interference and a noise ratio (SINR), a carrier to interference and noise ratio (CINR), a signal to noise ratio (SNR), error vector magnitude (EVM), a bit error rate (BER), and a block error rate (BLER). In addition to the above-described example, of course, other terms having an equivalent technical meaning or other metrics indicating a channel quality may be used. Hereinafter, in the present disclosure, high signal quality means a case in which a signal quality value related to a signal size is large or a signal quality value related to an error rate is small. When the signal quality is high, it may mean that a smooth wireless communication environment is guaranteed. In addition, an optimal beam may mean a beam having the highest signal quality among beams.

The present disclosure describes various embodiments using terms used in a portion of communication standards (e.g., 3rd Generation Partnership Project (3GPP) and European Telecommunications Standards Institute (ETSI)), but this is only an example for explanation. Various embodiments of the present disclosure may be easily modified and applied in another communication system.

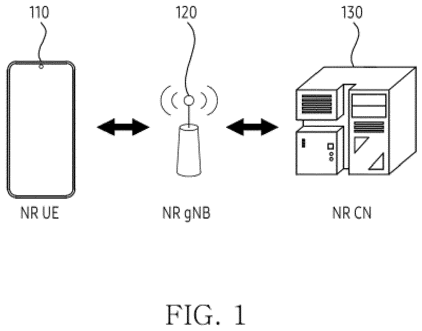

FIG. 1 illustrates a wireless communication system.

Referring to FIG. 1, FIG. 1 illustrates a terminal 110 and a base station 120 as a portion of nodes that utilize a wireless channel in a wireless communication system using New Radio (NR) as a wireless interface of Radio Access Technology (RAT). FIG. 1 illustrates only one base station, but the wireless communication system may further include another base station identical or similar to the base station (e.g., NR gNB) 120.

The terminal 110, which is an apparatus used by a user, communicates with the base station 120 through a wireless channel. A link from the base station 120 to the terminal 110 is referred to as a downlink (DL), and a link from the terminal 110 to the base station 120 is referred to as an uplink (UL). In addition, although not illustrated in FIG. 1, the terminal 110 and another terminal may communicate with each other through a wireless channel. At this time, a device-to-device link (D2D) between the terminal 110 and another terminal is referred to as a sidelink, and the sidelink may be used interchangeably with a PC5 interface. In some other embodiments, the terminal 110 may be operated without user involvement. According to an embodiment, the terminal 110, which is an apparatus that performs machine type communication (MTC), may not be carried by a user. In addition, according to an embodiment, the terminal 110 may be a narrowband (NB)-internet of things (IoT) device.

In describing the systems and methods in the present specification, the terminal 110 may be an electronic device used to communicate voice and/or data to the base station 120, and the base station 120 may, in turn, communicate with a network (e.g., a public exchange telephone network (PSTN), the Internet, and the like) of devices.

In addition, the terminal 110 may be referred to as a terminal, 'user equipment (UE)', a 'vehicle', 'customer premises equipment (CPE)', a 'mobile station', a 'subscriber station', a 'remote terminal', a 'wireless terminal', an 'electronic device', a 'user device', an 'access terminal', a 'mobile terminal', a 'remote station', a 'user terminal', a 'subscriber unit', a 'mobile device', or another term having an equivalent technical meaning thereto.

Additionally, examples of terminals 110 include cellular phones, smart phones, personal digital assistants (PDAs), laptop computers, netbooks, e-readers, wireless modems, and the like. In 3GPP standards, the terminal 110 is typically referred to as UE. However, since scope disclosed in the present specification should not be limited to the 3GPP standards, terms "UE" and "terminal" may be used interchangeably in the present specification to mean a more general term "wireless communication device". The UE may also more generally be referred to as a terminal device.

The base station 120 is a network infrastructure that provides wireless access to the terminal 110. The base station 120 has coverage defined based on a distance at which a signal may be transmitted. In the 3GPP standards, the base station 120 may generally be referred to as a 'node B', an 'evolved node B (eBodeB, eNB)', a '5th generation node', a 'next generation nodeB (gNB)', a 'home enhanced or evolved node B (HeNB)', an 'access point (AP)', a 'wireless point', a 'transmission/reception point (TRP)', or another term having an equivalent technical meaning thereto.

Since scope disclosed in the present specification should not be limited to the 3GPP standards, terms "base station", "node B", "eNB", and "HeNB" may be used interchangeably in the present specification to mean a more general term "base station". In addition, a term "base station" may be used to indicate an access point. The access point may be an electronic device that provides access to a network (e.g., a local area network (LAN), the Internet, and the like) for wireless communication devices. A term "communication device" may be used to indicate both a wireless communication device and/or a base station. The eNB or the gNB may also more generally be referred to as a base station device.

The base station 120 may communicate with an NR Core Network (NR CN) entity 130. For example, a core network entity 130 may include an access and mobility management function (AMF) that is in charge of a control plane such as terminal 110 access, a mobility control function, and the like, and a User Plane Function (UPF) that is in charge of a control function for user data.

The terminal 110 may perform beamforming with the base station 120. The terminal 110 and the base station 120 may transmit and receive a wireless signal in a relatively low frequency band (e.g., a frequency range 1 (FR 1) of the NR). In addition, the terminal 110 and the base station 120 may transmit and receive a wireless signal in a relatively high frequency band (e.g., a FR 2 (or, a FR 2-1, a FR 2-2, a FR 2-3), or a FR 3 of the NR), a millimeter wave (mmWave) band (e.g., 28 GHz, 30 GHz, 38 GHz, or 60 GHz)). In order to improve a channel gain, the terminal 110 and the base station 120 may perform the beamforming. Herein, the beamforming may include transmission beamforming and reception beamforming. The terminal 110 and the base station 120 may assign directivity to a transmission signal or a reception signal. To this end, the terminal 110 and the base station 120 may select serving beams through a beam search or a beam management procedure. After the serving beams are selected, subsequent communication may be performed through a resource that is in a Quasi Co-Location (QCL) relationship with a resource transmitting the serving beams.

If large-scale characteristics of a channel transferring a symbol on a first antenna port may be inferred from a channel transferring a symbol on a second antenna port, the first antenna port and the second antenna port may be evaluated to be in the QCL relationship. For example, the large-scale characteristics may include at least one of a delay spread, a doppler spread, a doppler shift, an average gain, an average delay, and a spatial receiver parameter.

Both the terminal 110 and the base station 120 may perform the beamforming, but embodiments of the present disclosure are not necessarily limited thereto. In some embodiments, the terminal 110 may or may not perform beamforming. In addition, the base station 120 may or may not perform the beamforming. That is, only one of the terminal 110 and the base station 120 may perform the beamforming, or both the terminal 110 and the base station 120 may not perform the beamforming.

In the present disclosure, a beam, which means a spatial flow of a signal in a wireless channel, may be formed by one or more antennas (or antenna elements), and this formation process may be referred to as the beamforming. The beamforming may include at least one of analog beamforming or digital beamforming (e.g., Precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, as a configuration for each reference signal, an information element (IE) such as a CSI-RS resource or an SRS-resource may be used, and this configuration may include information associated with the beam. Information associated with the beam may mean whether a corresponding configuration (e.g., a CSI-RS resource) uses the same spatial domain filter as another configuration (e.g., another CSI-RS resource in the same CSI-RS resource set), or another spatial domain filter, or which reference signal is quasi-co-located (QCL) with, and if it is QCL, which type (e.g., QCL type A, B, C, and D).

Hereinafter, in order to describe embodiments, a terminal may be referred to as UE 110, and a base station may be referred to as a gNB 120.

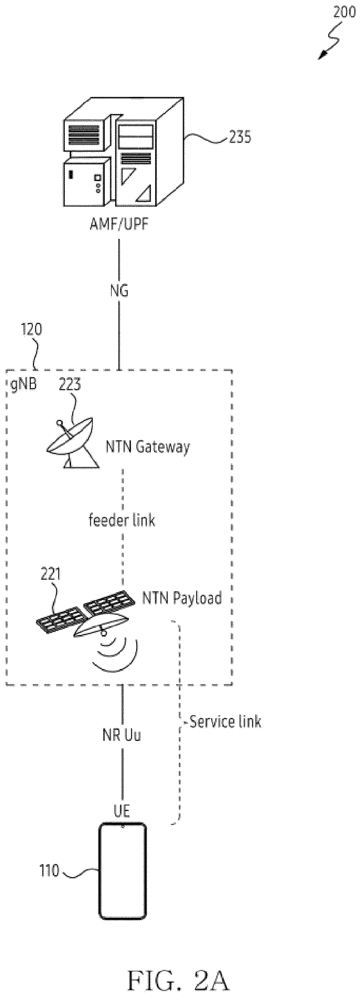

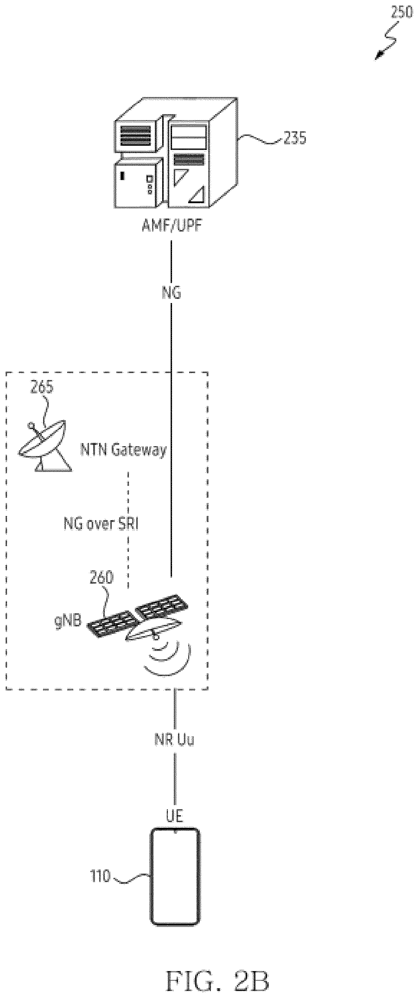

FIGS. 2A and 2B illustrate an example of a non-terrestrial network (NTN). In FIG. 2A, an example of the non-terrestrial network (NTN) using a transparent satellite is illustrated. In FIG. 2B, an example of the non-terrestrial network (NTN) using a regenerative satellite is illustrated. The NTN means a NG-RAN that provides non-terrestrial NR access to UE (e.g., the UE 110) through an NTN payload and an NTN gateway mounted on an airborne or space-borne NTN vehicle. The NG-RAN may include one or more gNBs (e.g., a gNB 120).

Referring to FIG. 2A, an NTN 200 indicates a network environment according to the transparent satellite. The NTN 200, which is the gNB 120, may include an NTN payload 221 and an NTN gateway 223. The NTN payload 221 is a network node mounted on a phase or a high altitude platform station (HAPS) that provides a connection function between a service link (described later) and a feeder link (described later). The NTN gateway 223 is an earth station disposed on a surface of the earth that provides a connection to the NTN payload 221 using the feeder link. The NTN gateway 223 is a transport network layer (TNL) node. The NTN 200 may provide the non-terrestrial NR access to the UE 110. The NTN 200 may provide the non-terrestrial NR access to the UE 110 through the NTN payload 221 and the NTN gateway 223. A link between the NTN payload 221 and the UE 110 may be referred to as the service link. A link between the NTN gateway 223 and the NTN payload 221 may be referred to as the feeder link. The feeder link may correspond to a wireless link.

The NTN payload 221 may receive wireless protocol data from the UE 110 through the service link. The NTN payload 221 may transparently transmit the wireless protocol data to the NTN gateway 223 through the feeder link. Accordingly, the NTN payload 221 and the NTN gateway 223 may be seen as one gNB 120 from a perspective of the UE 110. The NTN payload 221 and the NTN gateway 223 may communicate with the UE 110 through a Uu interface, which is a general wireless protocol. That is, the NTN payload 221 and the NTN gateway 223 may perform wireless protocol communication with the UE 110 like one gNB 120. The NTN gateway 223 may communicate with a core network entity 235 (AMF or UPF) through an NG interface.

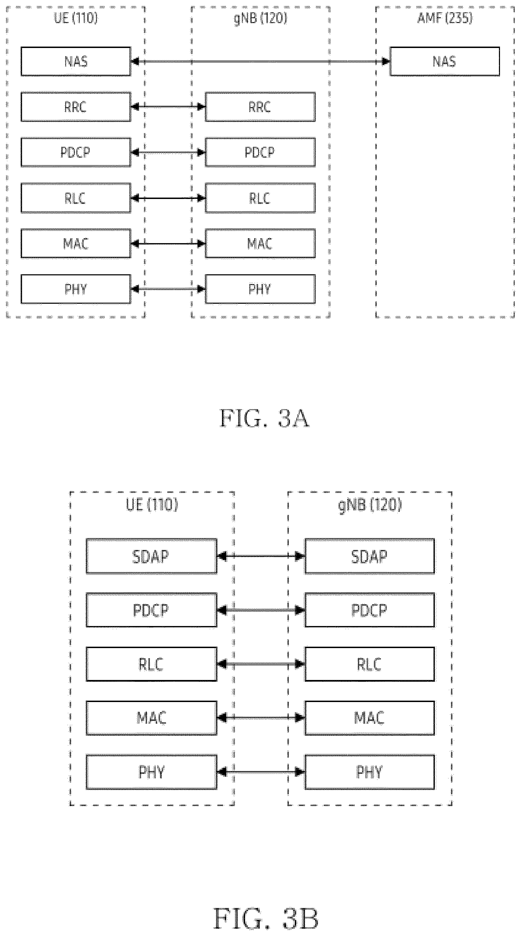

According to an embodiment, the NTN payload 221 and the NTN gateway 223 may use a wireless protocol stack in a control plane of FIG. 3A to be described later. In addition, according to an embodiment, the NTN payload 221 and the NTN gateway 223 may use the wireless protocol stack in a user plane of FIG. 3B.

In FIG. 2A, one NTN payload 221 and one NTN gateway 223 included in the gNB 120 are described, but embodiments of the present disclosure are not limited thereto. For example, a gNB may include a plurality of NTN payloads. In addition, for example, an NTN payload may be provided by a plurality of gNB. That is, an implementation scenario illustrated in FIG. 2A is an example and does not limit embodiments of the present disclosure.

Referring to FIG. 2B, an NTN 250 indicates a network environment according to the regenerative satellite. The NTN 250 may include a satellite 260 operating as the gNB 120. The satellite 260 indicates a space-borne vehicle equipped with a regenerative payload communication transmitter disposed in a low-earth orbit (LEO), a medium-earth orbit (MEO), or a geostationary earth orbit (GEO). The satellite 260 may be referred to as a regenerative payload or a regenerative satellite. The satellite 260 may indicate a payload configured to convert and amplify an uplink RF signal before transmitting the uplink RF signal to a downlink, and the conversion of the signal may mean digital processing capable of including demodulation, decoding, re-encoding, re-modulation and/or filtering. The NTN 250 may include an NTN gateway 265, which is an entity connected to the satellite 260 and disposed on the ground. The NTN gateway 265 is an earth station,

disposed on a surface of the earth, that provides a connection to the satellite 260 using the feeder link. The NTN 250 may provide the non-terrestrial NR access to the UE 110. The NTN 250 may provide the non-terrestrial NR access to the UE 110 through the satellite 260 and the NTN gateway 265.

The satellite 260 may be configured to regenerate signals received from the Earth. The Uu interface may be defined between the satellite 260 and the terminal 110. A satellite radio interface (SRI) on the feeder link may be defined between the satellite 260 and the NTN gateway 265. Although not illustrated in FIG. 2B, the satellite 260 may provide inter-satellite links (ISL) between satellites. The ISL may be a transmission link between satellites, and an ISL may be a a a wireless interface (e.g., an XN interface) defined in 3GPP or an optical interface, not defined in 3GPP. The satellite 260 may communicate with the core network entity 235 (AMF or UPF) through an NG interface, based on the NTN gateway 265. According to an embodiment, the satellite 260 may use the wireless protocol stack in the control plane of FIG. 3A to be described later. In addition, according to an embodiment, the satellite 260 may use the wireless protocol stack in the user plane of FIG. 3B.

In FIG. 2B, the satellite 260 operating as the gNB 120 is described, but embodiments of the present disclosure are not limited thereto. The gNB 120 according to embodiments may be implemented as a distributed deployment using a centralized unit (CU) configured to perform a function of upper layers (e.g., packet data convergence protocol (PDCP), or radio resource control (RRC)) of an access network and a distributed unit (DU) configured to perform a function of lower layers. An interface between the CU and the distributed unit (DU) may be referred to as an F1 interface. The centralized unit (CU) may be in charge of a function of a layer upper than the DU, by being connected to one or more DUs. For example, the CU may be in charge of a function of radio resource control (RRC) and packet data convergence protocol (PDCP) layers, and the DU and a radio unit (RU) may be in charge of a function of a lower layer. The DU may be in charge of a function of radio link control (RLC), media access control (MAC), and physical (PHY) layers. In this distributed deployment, the satellite 260 may be used as the CU or the DU constituting the gNB 120.

FIG. 3A illustrates an example of a control plane (C-plane). Hereinafter, at least a portion of descriptions of a gNB 120 may be understood as pertaining to a satellite 260.

Referring to FIG. 3A, in the C-plane, UE 110 and an AMF 235 may perform non-access stratum (NAS) signaling. In the C-plane, the UE 110 and the gNB 120 may communicate according to a protocol specified in each of a RRC layer, a PDCP layer, a RLC layer, a MAC layer, and a PHY layer.

In an NTN access, a main function of the RRC layer may include at least a portion of the following functions.

- Broadcasting access stratum (AS) and NAS related system information
- Paging initiated by 5G Core (5GC) or Next Generation-Radio Access network (NG-RAN)
- Establishment, maintenance, and release of RRC connection between UE and NG-RAN, including, more specifically, control over RLC, MAC, and PHY, including:

  - Addition, modification and release of Carrier Aggregation
  - Addition, modification and release of dual connectivity between NR or E-UTRA and NR.

- Security function including Key Management;
- Establishment, configuration, maintenance and release of Signaling Radio Bearer (SRB) and Data Radio Bearer (DRB)
- Movement function including:

  - Transferring handover and context;
  - Control UE cell selection and reselection and cell selection and reselection;
  - Mobility between RATs.

- Quality of service (QoS) management function;
- UE measurement report and report control;
- Radio link failure detection and recovery
- Message transmission from/to UE to/from NAS.

In the NTN access, a main function of the PDCP layer may include at least a portion of the following functions.

- Header compression and decompression: ROHC only
- Transfer of user data
- In-sequence delivery of upper layer PDUs
- Out-of-sequence delivery of upper layer PDUs
- PDCP PDU reordering for reception

- Duplicate detection of lower layer SDUs
- Retransmission of PDCP SDUs
- Ciphering and deciphering
- Timer-based SDU discard in uplink.

In the NTN access, a main function of the RLC layer may include at least a portion of the following functions.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the NTN access, the MAC layer may be connected to multiple RLC layer devices configured in a terminal, and a main function of the MAC may include at least a portion of the following functions.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

In the NTN access, the physical layer may perform operations of channel coding and modulating upper layer data, converting into an OFDM symbol and transmitting it to a wireless channel, or demodulating and channel decoding the OFDM symbol received via the wireless channel and transmitting it to the upper layers.

FIG. 3B illustrates an example of a user plane (U-plane). Hereinafter, at least a portion of descriptions of the gNB 120 may be understood as pertaining to the satellite 260.

Referring to FIG. 3B, in a U-plane, UE 110 and a gNB 120 may communicate according to a protocol specified in each of a SDAP layer, a PDCP layer, a RLC layer, a MAC layer, and a PHY layer. For the PDCP layer, the RLC layer, the MAC layer, and the PHY layer, except for the SDAP layer, the description of FIG. 3A may be referenced.

In the NTN access, the SDAP layer may provide a QoS flow of 5GC. A single protocol entity of a SDAP may be configured for each individual PDU session, and a function of the SDAP layer may include at least a portion of the following functions.

- Mapping between QoS flow and data radio bearer;
- Display of QoS flow identifier (ID) (QFI) in both DL and UL packets.

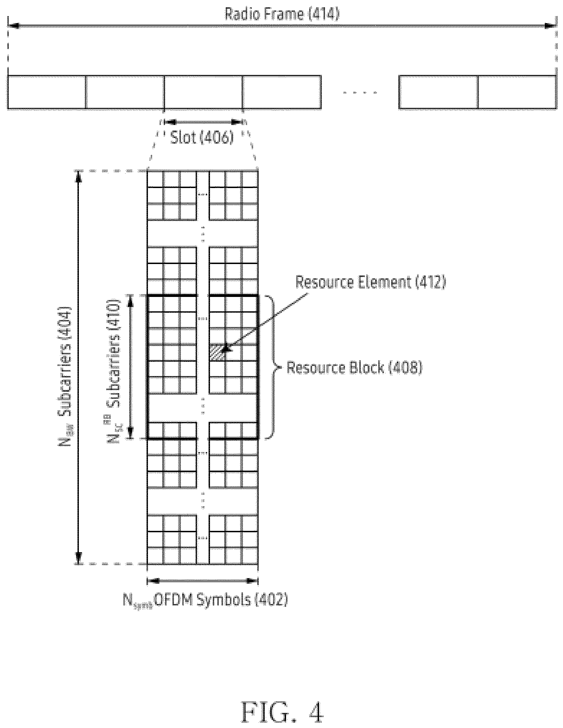

FIG. 4 illustrates an example of a resource structure of a time-frequency domain supported by a wireless communication system to which an embodiment proposed in the present specification may be applied. FIG. 4 illustrates a basic structure of a time-frequency domain, which is a radio resource domain in which data or a control channel is transmitted in downlink or uplink in a 5G NR system to which the present embodiment may be applied.

Referring to FIG. 4, a horizontal axis indicates a time domain, and a vertical axis indicates a frequency domain. A minimum transmission unit in the time domain is an OFDM symbol, and one slot 406 may be configured with $N_{symb}$ OFDM symbols 402. Referring to FIG. 4, in the wireless communication system to which the present invention is applied, one radio frame 414 may be defined as having a length of 10 ms, which is configured with 10 subframes having the same length of 1 ms. Additionally, one radio frame 414 may be divided into 5 ms half-frame, and each half-frame includes 5 subframes. In FIG. 4, a slot 406 is configured with 14 OFDM symbols, but a length of a slot may vary according to subcarrier spacing. For example, in case of Numerology having 15-khz subcarrier spacing, the slot is configured with a length of 1 ms, which is the same length as a subframe. In contrast, in case of Numerology having a 30 kHz subcarrier spacing, the slot is configured with 14 OFDM symbols, but two slots may be included in one subframe with a length of 0.5 ms.

That is, a subframe and a frame are defined with a fixed time length, and a slot is defined as the number of symbols, so that a time length may vary according to the subcarrier spacing. Referring again to FIG. 4, a radio resource supported by the wireless communication system to which the invention proposed in the present specification may be applied may be configured with a symbol, which is a plurality of time resources, and a sub-carrier, which is a plurality of frequency resource, and each of the time resources and the frequency resources may be represented by a two-dimensional resource grid. In FIG. 4, one quadrilateral, which is the smallest physical resource being configured with one sub-carrier and one symbol in a resource grid, is referred to as a resource element (RE) 412.

In the wireless communication system to which the invention proposed in the present specification may be applied, a minimum transmission unit in the frequency domain is a subcarrier, and a carrier bandwidth constituting the resource grid is configured with $N_{BW}$ subcarriers 404.

In a time-frequency domain, a basic unit of a resource, which is the resource element (hereinafter referred to as 'RE') 412, may be indicated as an OFDM symbol index and a subcarrier index. A resource block 408 may include a plurality of resource elements 412. In the wireless communication system to which the invention proposed in the present specification may be applied, the resource block 408 (or a physical resource block (hereinafter 'PRB')) may be defined as $N_{symb}$ consecutive OFDM symbols in the time domain and $N_{SC}^{RB}$ consecutive subcarriers in the frequency domain. In a NR system, the resource block (RB) 408 may be defined as $N_{SC}^{RB}$ consecutive subcarriers 410 in the frequency domain. One RB 408 includes $N_{SC}^{RB}$ REs 412 in a frequency axis.

In general, a minimum transmission unit of data is RB and the number of subcarriers is $N_{SC}^{RB}$ =12. The frequency domain may include common resource blocks (CRBs). In a bandwidth part (BWP) on the frequency domain, a physical resource block (PRB) may be defined. The CRB and PRB numbers may be determined according to subcarrier spacing. A data rate may increase in proportion to the number of RBs scheduled to a terminal.

In the NR system, in case of a frequency division duplex (FDD) system that operates a downlink and an uplink separately by frequency, a downlink transmission bandwidth and an uplink transmission bandwidth may be different from each other. A channel bandwidth indicates a radio frequency (RF) bandwidth corresponding to a system transmission bandwidth. Table 1 indicates a portion of a corresponding relationship between the system transmission bandwidth, the subcarrier spacing (SCS), and the channel bandwidth defined in the NR system in a frequency band (e.g., frequency range (FR) 1 (410 MHz to 7125 MHz)) lower than an upper limit (e.g., 7.125) GHz defined in a specification. Additionally, Table 2 indicates a portion of a corresponding relationship between a transmission bandwidth, the subcarrier spacing, and the channel bandwidth defined in the NR system in a frequency band (e.g., a FR2 (24250 MHz to 52600 MHz)) higher than a lower limit (e.g., 24.25 GHz) or a FR2-2 (52600 MHz - 71,000 MHz) defined in a specification. For example, the transmission bandwidth of the NR system having a 100 MHz channel bandwidth at 30 kHz subcarrier spacing is configured with 273 RBs. In Table 1 and Table 2, N/A may be a bandwidth-subcarrier combination that is not supported by the NR system.

[Table 1]

| Channel bandwidth [MHz] | SCS | 5 | 10 | 20 | 50 | 80 | 100 |
|---|---|---|---|---|---|---|---|
| Transmission bandwidth configuration $N_{RB}$ | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

[Table 2]

| Channel bandwidth [MHz] | SCS | 50 | 100 | 200 | 400 |
|---|---|---|---|---|---|
| Transmission bandwidth configuration $N_{RB}$ | 60kHz | 66 | 132 | 264 | N/A |
| | 120kHz | 32 | 66 | 132 | 264 |

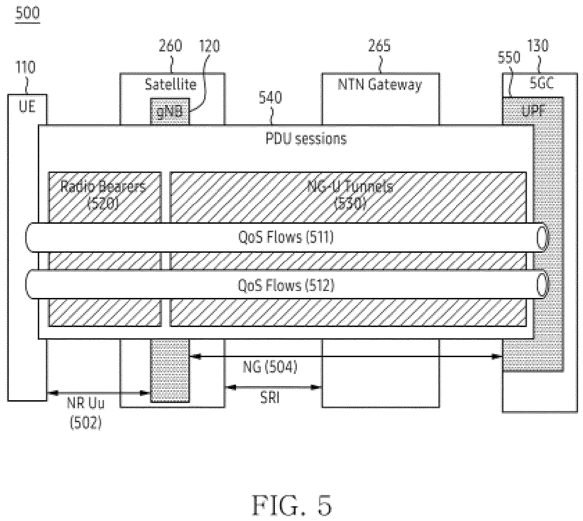

FIG. 5 illustrates an example of a network structure for an NTN. A satellite 260 may be mounted on a space platform or an aerial platform to provide a structure, power, a command, telemetry, posture control (corresponding HAPS) for a satellite, an appropriate thermal environment, and radiation shielding. In FIG. 5, an example in which the satellite 260, as a regenerative payload, operates as a full base station (e.g., a gNB 120) is described.

Referring to FIG. 5, the satellite 260 may operate as the gNB 120. The gNB 120 may communicate with a terminal 110 or may communicate with a core network entity 130. In FIG. 5, a UPF 550 is illustrated as the core network entity 130. An NR Uu interface 502 may be used between the satellite 260 and the terminal 110. According to an embodiment, at least one radio bearer 520 may be generated between the satellite 260 and the terminal 110. For example, the radio bearer 520 may include a data radio bearer (DRB). For example, the radio bearer 520 may include a signaling radio bearer (SRB). An NG interface 504 may be used between the satellite 260 and a core network entity (e.g., AMF and UPF). For example, an N3 interface may be used between the satellite 260 and the UPF. For example, an N2 interface may be used between the satellite 260 and the AMF. According to an embodiment, a traffic tunnel may be generated between the satellite 260 and the core network entity 130. For example, an NG-U tunnel 530 may be generated between the satellite 260 and a UPF 550.

A packet data unit (PDU) session 540 may be generated between UE 110 and the core network entity 130 (e.g., the UPF 550). The PDU session 540 may be used to provide an end-to-end user plane connection between the terminal 110 and a data network through the UPF 550. The PDU session 540 may support one or more quality of service (QoS) flows. For example, the PDU session 540 may support a first QoS flow 511 and a second QoS flow 512. In a user plane, the radio bearer 520 may be mapped to a QoS flow (e.g., the first QoS flow 511 and the second QoS flow 512). According to an embodiment, the satellite 260, which is the gNB 120, may perform mapping between the DRB and the QoS flow.

Although not illustrated in FIG. 5, operation and maintenance (O&M) may be used to provide a wireless access network through the satellite 260. The O&M may provide one or more parameters related to an NTN 500 to the gNB 120 (e.g., the satellite 260). For example, operation and maintenance (O&M) 510 may provide at least following NTN related parameters to the gNB 120 for operation.

a) Earth fixed beams: for each beam provided by given NTN payload:

- Cell identifier mapped to beam (NG and Uu)
- Reference position of cell (e.g., center and range of cell).

b) Quasi earth fixed beams: for each beam provided by given NTN payload:

- Cell identifier (NG and Uu) and time window mapped to beam;
- Reference position of cell/beam (e.g., center and range of cell)
- Time window of continuous switch-over (feather link, service link)
- Identifier and time window of all satellites and NTN gateways that provide service.

c) Earth moving beams: for each beam provided by given NTN payload:

- Uu cell identifier mapped to beam, mapping information on fixed geographic area reported to NG, information on movement of foot-print of beam on the Earth;
- Elevation for NTN payload;
- Continuous service schedule of NTN gateways/gNBs;
- Continuous switch-over schedule (feather link, service link).

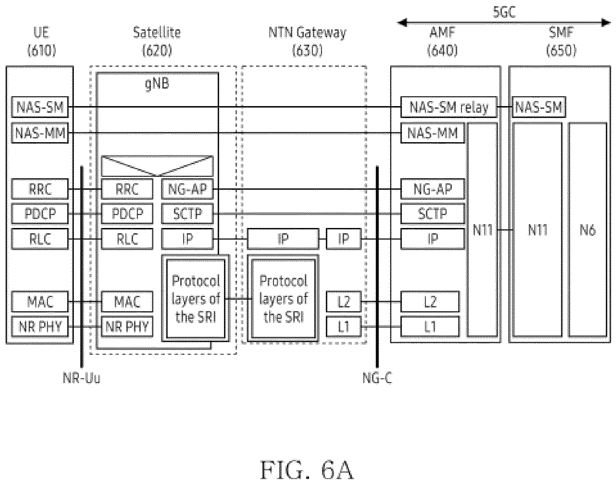

FIG. 6A illustrates an example of a control plane of a regenerative satellite (e.g., the satellite 260).

Referring to FIG. 6A, UE 610 may support a protocol of a PHY layer, a MAC layer, a RLC layer, a PDCP layer, and a RRC layer. A satellite 620, which is a gNB, may support the protocol of the PHY layer, the MAC layer, the RLC layer, the PDCP layer, and the RRC layer. For the satellite 620, a description of the satellite 260 may be referenced. A description of the protocol of each layer, the description of FIG. 3A may be referenced. An interface between the UE 610 and the satellite 620 may be a Uu interface.

The satellite 620, which is a gNB mounted on a board or a portion of the gNB, may perform an NG-RAN protocol function. The satellite 620 may perform communication (e.g., IP communication) with an NTN gateway 630 located on the ground through an SRI. The satellite 620 may access 5GC through the NTN gateway 630. As a network entity for the 5GC, an AMF 640 (e.g., AMF 235) and an SMF 650 are exemplified. The satellite 620 may support a protocol of an NG-AP layer, a stream control transmission protocol (SCTP) layer, and an IP layer for communication with the 5GC. The NG-AP layer may be used through an NTN gateway over a SCTP between the AMF 640, which is a 5GC entity, and the satellite 620. NAS signaling between the UE 610 and the AMF 640 may be performed through the satellite 620 and the NTN gateway 630. The NAS signaling may include a NAS-mobility management (MM) interface for the AMF 640. The NAS signaling may include a NAS-SM relay and/or a NAS-session management (SM) for the SMF 650. The NAS signaling may be transmitted through an NG-AP layer protocol between the AMF 640, which is the 5GC entity, and the satellite 620, via the NTN gateway 630.

In FIG. 6A, an example in which a satellite operates as a full gNB is described, but embodiments of the present disclosure are not limited thereto. As a non-limiting example, the satellite may operate as a gNB-DU according to functional separation. Accordingly, the satellite may be configured to support a protocol of the RLC layer, the MAC layer, and the PHY layer.

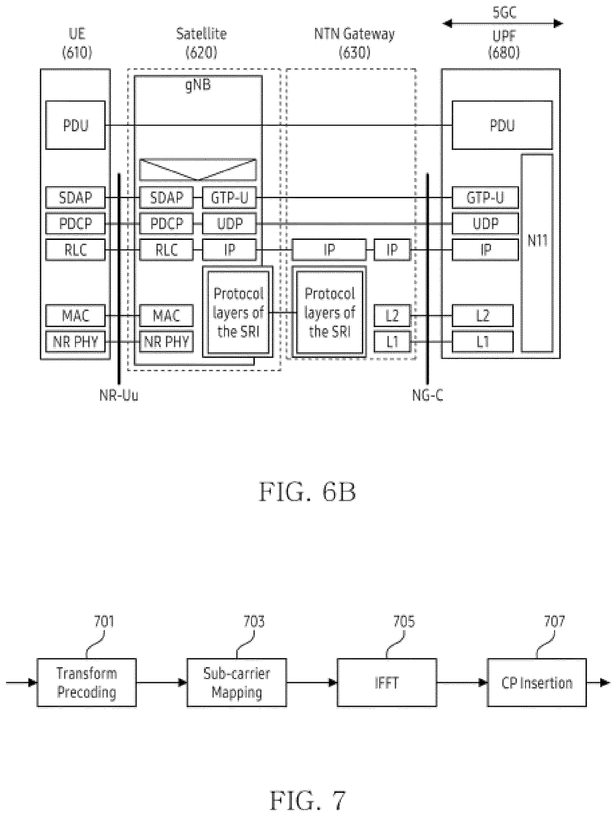

FIG. 6B illustrates an example of a user plane of a regenerative satellite (e.g., the satellite 260).

Referring to FIG. 6B, the UE 610 may support a protocol of the PHY layer, the MAC layer, the RLC layer, the PDCP layer, and an SDAP layer. The satellite 620, which is the gNB, may support the protocol of the PHY layer, the MAC layer, the RLC layer, the PDCP layer, and the SDAP layer. As a description of the protocol of each layer, the description of FIG. 3B may be referenced. The interface between the UE 610 and the satellite 620 may be the Uu interface.

The satellite 620, which is the gNB mounted on a board, may perform the NG-RAN protocol function. The satellite 620 may perform communication (e.g., IP communication) with the NTN gateway 630 located on the ground through the SRI. The satellite 620 may access the 5GC through the NTN gateway 630. An UPF 680 is exemplified as the network entity for the 5GC. The satellite 620 may support protocols of a General Packet Radio Service (GPRS) tunneling protocol-user plane (GTP-U) layer, a user datagram protocol (UDP) layer, and the IP layer for communication with the 5GC. A PDU session (e.g., the PDU session 540 of FIG. 5) between the UE 610 and the UPF 680 may be generated. A protocol stack of the SRI may be used to transmit a UE user plane between a satellite and an NTN-gateway. Signals on the PDU session may be transmitted through the NTN gateway 630 between the UPF 680, which is the 5GC, and the satellite 620 via a GTP-U tunnel.

In FIG. 6B, an example in which a satellite operates as a full gNB is described, but embodiments of the present disclosure are not limited thereto. As a non-limiting example, the satellite may operate as a gNB-DU according to functional separation. Accordingly, the satellite may be configured to support protocols of the RLC layer, the MAC layer, and the PHY layer.

Signals transmitted from a base station to a terminal may be referred to as downlink signals, and signals transmitted from the terminal to the base station may be referred to as uplink signals. In an LTE standard, a waveform applied to the downlink signals is orthogonal frequency division multiplexing (OFDM), whereas a waveform applied to the uplink signals is discrete fourier transform-spreading (DFT-S) OFDM. In order to solve a problem of a peak-to-average power ratio (PAPR) increasing in the OFDM, the terminal with a limitation in terms of power modulates signals using a DFT-S OFDM scheme when transmitting the uplink signals. In a 5G NR standard, an OFDM scheme (e.g., referred to as cyclic prefix (CP) OFDM) is applied as before for the downlink signals, whereas the OFDM scheme or the DFT-S OFDM scheme is applied adaptively for the uplink signals. That is, in transmitting the uplink signals according to a situation of the terminal, a modulation scheme may be changed.

This assumption is because the base station (network) transmitting the downlink signals has almost no restriction in terms of power consumption, but the terminal transmitting the uplink signals has restriction in terms of power consumption. However, as technology has developed and a non-terrestrial network, that is satellite communication, is introduced to increase coverage while reducing a shadow area, a satellite located in the air transmits the downlink signals instead of an existing network entity disposed on the ground. Since the satellite not only moves in an orbit periodically, but is located on a non-ground other than on the ground, a problem of power may occur. Therefore, in embodiments of the present disclosure, technologies for power saving in the satellite are described.

## 1. DL DFT-S OFDM (Transform precoding Enabled)

FIG. 7 illustrates an example of transform precoding. An application of the transform precoding indicates that a waveform modulation scheme is a discrete fourier transform-spreading (DFT-S) scheme.

Referring to FIG. 7, in a non-terrestrial network, a downlink transmission waveform may use transform precoding 701. A satellite (e.g., a satellite 620) may modulate downlink signals through the transform precoding 701, subcarrier mapping 703, Inverse Fast Fourier Transform (IFFT) 705, and CP insertion 707. The transform precoding 701 performs a Spreading process based on Discrete Frequency Transform (DFT). That is, the transform precoding 701 indicates that DFT spreading is performed in an OFDM (hereinafter, CP-OFDM) technique using CP. The downlink transmission waveform may be a CP-OFDM scheme or a DFT-S OFDM scheme according to activation or deactivation of the DFT spreading.

For example, in a case that the transform precoding 701 is activated in downlink data (e.g., PDSCH), the following equation may be referenced.

【Equation 1】

$$y^{(0)}(l \cdot M_{sc}^{PDSCH} + k) = \frac{1}{\sqrt{M_{sc}^{PUSCH}}} \sum_{i=0}^{M_{sc}^{PDSCH}-1} \tilde{x}^{(0)}(l \cdot M_{sc}^{PDSCH} + i) e^{-j\frac{2\pi ik}{M_{sc}^{PDSCH}}}$$

$$k = 0, ..., M_{sc}^{PDSCH} - 1$$

$$l = 0, ..., M_{symb}^{layer} / M_{sc}^{PDSCH} - 1$$

The $M_{SC}^{PDSCH}$ may indicate a product of the number of RBs scheduled for a PDSCH and the number ($N_{SC}^{RB}$ (=12)) of subcarriers, and symbols may be modulated according to the Equation 1.

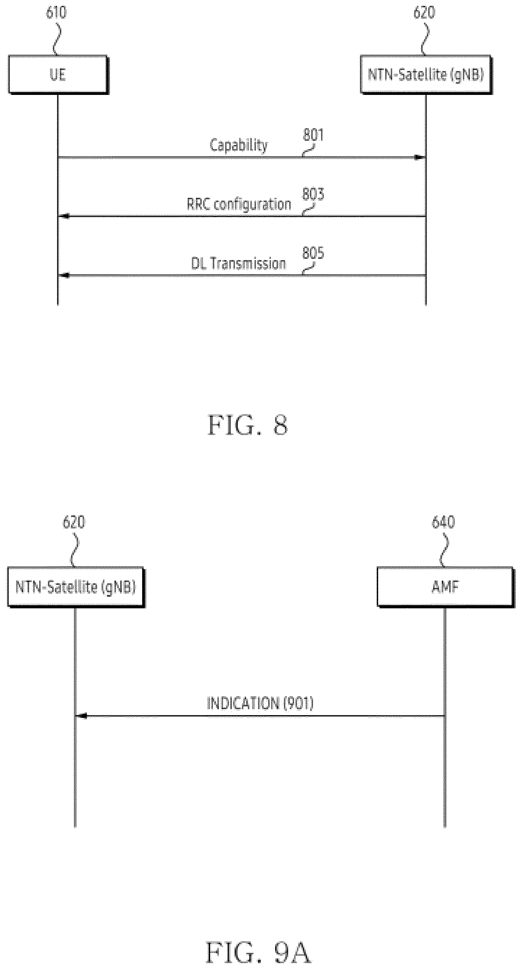

FIG. 8 illustrates signaling for downlink transmission using transform precoding. The same reference numbers may indicate an application of the same description.

Referring to FIG. 8, in an operation 801, UE 610 may transmit capability information to a satellite 620. According to an embodiment, the capability information may indicate whether the UE 610 may receive downlink transmission to which the transform precoding is applied. For example, a change in a waveform of downlink signals may cause a hardware change of an entity (e.g., the UE 610) that processes the downlink signals. In a network (e.g., the satellite 620), the satellite 620 may preemptively receive the capability information from the UE 610 to determine whether the downlink transmission is received.

In an operation 803, the satellite 620 may transmit RRC configuration information to the UE 610. The RRC configuration information may include configuration information related to the downlink transmission. For example, the RRC configuration information may include configuration information on a control signal (e.g., a PDCCH). The configuration information on the control signal may indicate whether the transform precoding is activated when the control signal is generated. When the transform precoding is activated, the control signal may be generated according to a DFT-S OFDM scheme. For example, the RRC configuration information may include configuration information on data (e.g., a PDSCH). The configuration information on the data may indicate whether the transform precoding is activated. If the transform precoding is activated, the data may be generated according to the DFT-S OFDM scheme.

According to embodiments, the RRC configuration information may include various information other than simply indicating whether the transform precoding is activated. According to an embodiment, the RRC configuration information may include information on a modulation and coding scheme (MCS) table when the transform precoding is activated. The MCS table may be used to indicate a modulation scheme of data transmitted between the UE 610 and the satellite 620. The UE 610 may check the modulation scheme of an indicated MCS index by using another MCS table according to whether the downlink transmission is the DFT-S OFDM scheme or a CP-OFDM scheme. For example, the RRC configuration information may include the following information.

【Table 3】

| |
|---|
| –          *PDSCH-Config* |
| The IE *PDSCH-Config* is used to configure the UE specific PDSCH parameters applicable to a particular BWP. |
| ***PDSCH-Config* information element** |
| `-- ASN1START`<br>`-- TAG-PDSCH-CONFIG-START`<br><br>`PDSCH-Config ::=`       `SEQUENCE {`<br>                              `OPTIONAL, -- Need S`<br>   `...`<br>   `mcs-Table`        `ENUMERATED {qam256, qam64LowSE}`<br>`OPTIONAL, -- Need S`<br>   `mcs-TableTransformPrecoder`    `ENUMERATED {qam256, qam64LowSE}`<br>`OPTIONAL, -- Need S`<br>   `transformPrecoder`      `ENUMERATED {enabled, disabled}`<br>`OPTIONAL, -- Need S` |

The **'mcs-TableTransformPrecoder'** indicates information on a table to be used by the UE 610 when the transform precoding is activated, and the 'qam256' and the 'qam64LowSe' indicate tables different to each other. The 'transformPrecoder' indicates whether the transform precoding is activated. A difference in an MCS table is because a category of an MCS table that may be supported is different. For example, according to whether the transform precoding is activated in the PDSCH, the modulation scheme for each modulation order may vary as follows.

[Table 4]

| Transform precoding disabled | | Transform precoding enabled | |
|---|---|---|---|
| Modulation scheme | Modulation order $Q_m$ | Modulation scheme | Modulation order $Q_m$ |
|  |  | π/2-BPSK | 1 |
| QPSK | 2 | QPSK | 2 |
| 16QAM | 4 | 16QAM | 4 |
| 64QAM | 6 | 64QAM | 6 |
| 256QAM | 8 | 256QAM | 8 |

According to an embodiment, the RRC configuration information may include information on a reference signal. In a 5G NR standard, for channel estimation of downlink signals (e.g., the PDCCH, and the PDSCH), a DMRS or a PTRS may be transmitted together with the downlink signals. Whether the transform precoding is activated may also be indicated for the DMRS and the PTRS. For example, the RRC configuration information may include the following information.

【Table 5】

---

–        *DMRS-DownlinkConfig*

The IE *DMRS-DownlinkConfig* is used to configure Downlink demodulation reference signals for PDSCH.

**DMRS-DownlinkConfig information element**

```
-- ASN1START
-- TAG-DMRS-DOWNLINKCONFIG-START
```

---

```
DMRS-DownlinkConfig ::=                    SEQUENCE {
    dmrs-Type                              ENUMERATED {type2}
OPTIONAL,     -- Need S
    dmrs-AdditionalPosition                ENUMERATED {pos0, pos1, pos3}
OPTIONAL,     -- Need S
    phaseTrackingRS                        SetupRelease { PTRS-DownlinkConfig }
OPTIONAL,     -- Need M
    maxLength                              ENUMERATED {len2}
OPTIONAL,     -- Need S
    transformPrecodingDisabled             SEQUENCE {
        scramblingID0                         INTEGER (0..65535)
OPTIONAL,     -- Need S
        scramblingID1                         INTEGER (0..65535)
OPTIONAL,     -- Need S
        ...,
        [[
        dmrs-Downlink-r16                     ENUMERATED {enabled}
OPTIONAL,     -- Need R
        ]]
    }
OPTIONAL,     -- Need R
    transformPrecodingEnabled          SEQUENCE {
        nPDSCH-Identity
INTEGER(0..1007)                                           OPTIONAL,     -- Need S
        sequenceGroupHopping               ENUMERATED {disabled}
OPTIONAL,     -- Need S
        sequenceHopping                    ENUMERATED {enabled}
OPTIONAL,     -- Need S
        ...,
        [[
        dmrs-DownlinkTransformPrecoding-r16    SetupRelease {DMRS-
DownlinkTransformPrecoding-r16}                   OPTIONAL     -- Need M
        ]]
    }
OPTIONAL,     -- Need R
    ...
}

DMRS-DownlinkTransformPrecoding-r16  ::=   SEQUENCE {
    pi2BPSK-ScramblingID0                  INTEGER(0..65535)
OPTIONAL,     -- Need S
    pi2BPSK-ScramblingID1                  INTEGER(0..65535)
OPTIONAL     -- Need S
}

-- TAG-DMRS-DOWNLINKCONFIG-STOP
-- ASN1STOP
```

The 'nPDSCH-Identity' IE indicate an ID value required when generating a DMRS sequence for the PDSCH. The 'sequenceGroupHoping' IE may indicate whether to group hopping when the transform precoding is activated. When group hopping is indicated by another cell-specific parameter, the group hopping may be deactivated for the UE 610 through the IE. The 'sequenceHopping' IE may indicate whether to hopping when the transform precoding is activated. When the transform precoding is activated, 'pi2BPSK-ScrammingID0' and 'pi2BPSK-ScrammingID 1' IEs indicate identifier values used to initialization of DM DMRS scrambling.

【Table 6】

– *PTRS-DownlinkConfig*

The IE *PTRS-DownlinkConfig* is used to configure downlink Phase-Tracking-Reference-Signals (PTRS).

**PTRS-DownlinkConfig information element**

```
-- ASN1START
-- TAG-PTRS-DOWNLINKCONFIG-START

PTRS-DownlinkConfig ::=                    SEQUENCE {
    transformPrecoderDisabled              SEQUENCE {
        frequencyDensity                   SEQUENCE (SIZE (2)) OF INTEGER (1..276)
OPTIONAL,   -- Need S
        timeDensity                        SEQUENCE (SIZE (3)) OF INTEGER (0..29)
OPTIONAL,   -- Need S
        epre-Ratio                         INTEGER (0..3)
        maxNrofPorts                       ENUMERATED {n1, n2},
        resourceElementOffset              ENUMERATED {offset01, offset10, offset11 }
OPTIONAL,   -- Need S
        ptrs-Power                         ENUMERATED {p00, p01, p10, p11}
    }
OPTIONAL,   -- Need R
    transformPrecoderEnabled               SEQUENCE {
        sampleDensity                         SEQUENCE (SIZE (5)) OF INTEGER
{1..276},
        timeDensityTransformPrecoding         ENUMERATED {d2}
OPTIONAL   -- Need S
    }
OPTIONAL,   -- Need R

    ...
}

-- TAG-PTRS-DOWNLINKCONFIG-STOP
-- ASN1STOP
```

In a case that transform precoding of the downlink transmission is activated, the 'sampleDensity' IE and the 'timeDensityTransformPrecoding' IE may be used when transmitting the PTRS. The 'sampleDensity' IE indicates dependence between a scheduled BW and a PTRS existence. The 'timeDensityTransformPrecoding' IE indicates a density on a time axis of an OFDM symbol unit of the PTRS.

In an operation 805, the satellite 620 may perform downlink transmission.

The satellite 620 may generate the downlink signals in the RRC configuration information of the operation 803, as indicated. For example, in a case that the RRC configuration information indicates the DFT-S OFDM scheme (e.g., activation of transform precoding 701), the satellite 620 may generate the downlink signals through a series of procedures illustrated in FIG. 7. For example, in a case that the RRC configuration information indicates the CP-OFDM scheme (e.g., deactivation of transform precoding 701), the satellite 620 may generate the downlink signals through subcarrier mapping 703, Inverse Fast Fourier Transform (IFFT) 705, and CP insertion 707 except the transform precoding 701 among the series of procedures illustrated in FIG. 7. The downlink signals may be transmitted on the PDCCH or the PDSCH, or may include the DMRS and/or the PTRS.

In FIG. 8, through the RRC configuration information, it is indicated whether the downlink transmission of the satellite 620 uses the DFT-S OFDM scheme or uses the CP-OFDM scheme, but embodiments of the present disclosure are not limited thereto. As a non-limiting example, the satellite 620 may indicate the DFT-S OFDM scheme (e.g., activation of the transform precoding 701) through MAC CE or DCI. In addition, in FIG. 8, an example in which the satellite 620 transmits an RRC configuration message to the UE 610 after the UE 610 transmits the capability information to the satellite 620 is described, but embodiments of the present disclosure are not limited thereto. As a non-limiting example, an operation of transmitting the capability information of the operation 801 may be performed independently of a setting operation of the satellite 620. For example, the operation 801 may be omitted.

FIG. 9A illustrates an example of signaling through an NG interface in an NTN. The same reference numbers may indicate an application of the same description. In downlink transmission, whether to use a DFT-S OFDM scheme or a CP-OFDM scheme may depend on a state of a satellite (e.g., a satellite 620). For example, in a case that a power state of the satellite 620 is not normal or a PAPR problem is expected to increase due to a plurality of UEs connected to the satellite 620, the satellite 620 may change a waveform setting for the downlink transmission from the CP-OFDM scheme to the DFT-S OFDM scheme. This determination may be performed by the satellite 620 itself, but may also be performed by a separate network entity (e.g., an AMF 640) that manages the satellite 620.

Referring to FIG. 9A, in an operation 901, the AMF 640 may transmit an indication message for a waveform setting of downlink signals to the satellite 620. The indication message may include information related to the downlink signals on a cell provided by the satellite 620. The satellite 620 may transmit the downlink signals to a terminal (e.g., the UE 610) according to the indication message.

According to an embodiment, the indication message may indicate whether transform precoding (e.g., transform precoding 701) is activated. For example, whether to activate the transform precoding may be determined cell-specifically. The indication message may include a cell identifier (e.g., a physical cell ID or a cell global identity (CGI)). For example, whether to activate the transform precoding may be determined terminal-specifically. The indication message may include a UE ID (e.g., a global unique AMF identifier (GUAMI)) specified in the NG interface. For example, 'DL-transformPrecodingEnabled' IE may be included in the indication message.

According to an embodiment, the indication message may indicate a time when the transform precoding (e.g., the transform precoding 701) is activated. When the transform precoding is activated, spectral efficiency is reduced, and complexity of signal processing may increase due to an additional operation of DFT spreading. Therefore, when the activation of the transform precoding is indicated, the indication message may include information (e.g., a timer) on a time when the activation is maintained. The timer may start from a specific time point (e.g., a time point when the downlink transmission is started or a time point when the indication message is received). When the timer expires, the satellite 620 may change the waveform setting from the DFT-S OFDM to the CP-OFDM. For example, 'DL-transformPrecodingEnabled Timer' IE may be included in the indication message.

According to an embodiment, the indication message may include information on a geographic area in which the transform precoding is to be used. The satellite 620 may be configured to move along an orbit around a celestial body. Compared to the CP-OFDM scheme, the DFT-S OFDM scheme may provide wide cell coverage and provide high power efficiency. Therefore, in terms of the satellite 620 orbiting the celestial body (e.g., Earth), in an area where a shadow area is expected to be relatively large or in an area where the number of other satellites providing an access network is relatively small, expanding coverage of the satellite 620 may be advantageous for providing a continuous service. For example, the indication message may include information (e.g., a tracking area identity (TAI) list) on a tracking area. For example, 'TAI list for 'TransformPrecoding' IE may be included in the indication message.

The indication message may be newly defined or used as a message defined on an existing NG interface. According to an embodiment, the indication message may be an 'INITIAL CONTEST SETUP REQUEST' message. The indication message may include at least one of information indicating whether the transform precoding (e.g., the transform precoding 701) is activated, information (e.g., the TAI list) on the geographic area in which the transform precoding is to be used, and information (e.g., the timer) on the time when the transform precoding is activated. Whether to activate the transform precoding may be indicated in a UE unit. For example, the indication message may further include an AMF UE NGAP ID, a RAN UE NGAP ID, the GUAMI, a PDU session ID, Single - Network Slice Selection Assistance Information (S-NSSAI), and the like, in addition to the above-described transform precoding-related information.

According to an embodiment, the indication message may be a 'UE Context Modification Request' message. The indication message may include at least one of the information indicating whether the transform precoding (e.g., the transform precoding 701) is activated, the information (e.g., the TAI list) on the geographic area in which the transform precoding is to be used, and the information (e.g., the timer) on the time when the transform precoding is activated. Whether to activate the transform precoding may be indicated in the UE unit. For example, the indication message may further include the AMF UE NGAP ID, the RAN UE NGAP ID, the PDU session ID, the S-NSSAI, and the like, in addition to the above-described transform precoding-related information.

According to an embodiment, the indication message may be a 'PDU SESSION RESOURCE SETUP REQUEST' message. The indication message may include at least one of the information indicating whether the transform precoding (e.g., the transform precoding 701) is activated, the information (e.g., the TAI list) on the geographic area in which the transform precoding is to be used, and the information (e.g., the timer) on the time when the transform precoding is activated. Whether to activate the transform precoding may be indicated in the UE unit. For example, the indication message may further include the AMF UE NGAP ID, the RAN UE NGAP ID, and the GUAMI, the PDU session ID, the S-NSSAI, and the like, in addition to the above-described transform precoding-related information.

According to an embodiment, the indication message may be a 'PDU SESSION RESOURCE MODIFY REQUEST' message. The indication message may include at least one of the information indicating whether the transform precoding (e.g., the transform precoding 701) is activated, the information (e.g., the TAI list) on the geographic area in which the transform precoding is to be used, and the information (e.g., the timer) on the time when the transform precoding is activated. Whether to activate the transform precoding may be indicated in the UE unit. For example, the indication message may further include the AMF UE NGAP ID, the RAN UE NGAP ID, and the GUAMI, the PDU session ID, the S-NSSAI, and the like, in addition to the above-described transform precoding-related information.

According to an embodiment, the indication message may be a 'WRITE-REPLACE WARNING REQUEST' message. A scenario in which public disaster text is provided through a satellite may be considered. The indication message may include at least one of the information indicating whether the transform precoding (e.g., the transform precoding 701) is activated, the information (e.g., the TAI list) on the geographic area in which the transform precoding is to be used, and the information (e.g., the timer) on the time when the transform precoding is activated. Whether to activate the transform precoding may be indicated in the UE unit. For example, the indication message may further include a message identifier, a serial number, a repetition period, the number of broadcasts, a warning type, and/or message content.

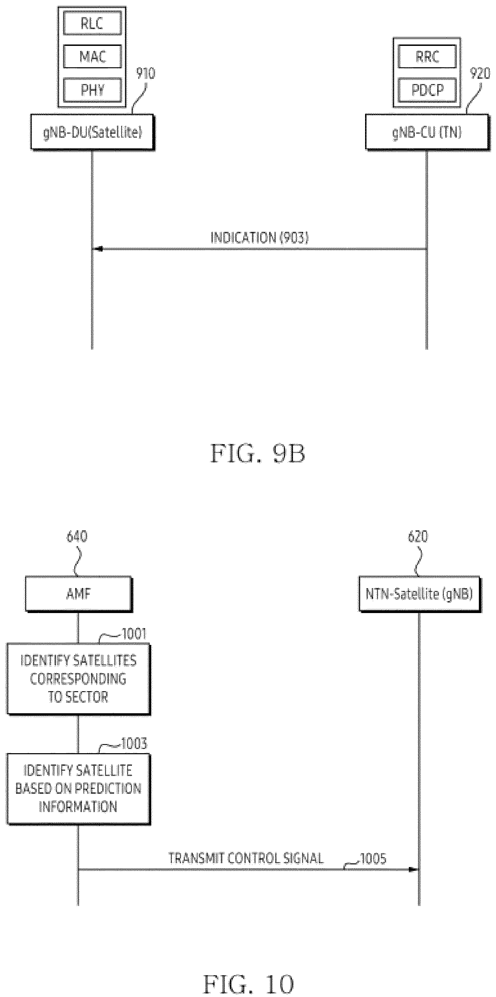

FIG. 9B illustrates an example of signaling through an F 1 interface in an NTN. The same reference numbers may indicate an application of the same description.

Referring to FIG. 9B, in an operation 903, a gNB-CU 920 may transmit an indication message to a gNB-DU 910 corresponding to a satellite. The indication message may include information related to downlink signals on a cell provided by a satellite 620. The satellite 620 may transmit the downlink signals to a terminal (e.g., the UE 610) according to the indication message.

According to an embodiment, the indication message may indicate whether transform precoding (e.g., transform precoding 701) is activated. For example, whether to activate the transform precoding may be determined cell-specifically. The indication message may include a cell identifier (e.g., a physical cell ID or a cell global identity (CGI)). For example, whether to activate the transform precoding may be determined terminal-specifically. The indication message may include a UE ID (e.g., a global unique AMF identifier (GUAMI)) specified in a NG interface. For example, 'DL-transformPrecodingEnabled' IE may be included in the indication message.

According to an embodiment, the indication message may indicate a time when the transform precoding (e.g., the transform precoding 701) is activated. When the transform precoding is activated, spectral efficiency is reduced, and complexity of signal processing may increase due to an additional operation of DFT spreading. Therefore, when the activation of the transform precoding is indicated, the indication message may include information (e.g., a timer) on a time when the activation is maintained. The timer may start from a specific time point (e.g., a time point when the downlink transmission is started or a time point when the indication message is received). When the timer expires, the satellite 620 may change the waveform setting from DFT-S OFDM to CP-OFDM. For example, 'DL-transformPrecodingEnabled Timer' IE may be included in the indication message.

According to an embodiment, the indication message may include information on a geographic area in which the transform precoding is to be used. The satellite 620 may be configured to move along an orbit around a celestial body. Compared to the CP-OFDM scheme, the DFT-S OFDM scheme may provide wide cell coverage and provide high power efficiency. Therefore, in terms of the satellite 620 orbiting the celestial body (e.g., Earth), in an area where a shadow area is expected to be relatively large or in an area where the number of other satellites providing an access network is relatively small, expanding coverage of the satellite 620 may be advantageous for providing a continuous service. For example, the indication message may include information (e.g., a tracking area identity (TAI) list) on a tracking area. For example, 'TAI list for 'TransformPrecoding' IE may be included in the indication message.

The indication message may be newly defined or used as a message defined on an existing NG interface.

According to an embodiment, the indication message may be a 'GNB-DU CONFIGURATION UPDATE' message. The indication message may include at least one of information indicating whether the transform precoding (e.g., the transform precoding 701) is activated, information (e.g., the TAI list) on the geographic area in which the transform precoding is to be used, and information (e.g., the timer) on the time when the transform precoding is activated. Whether to activate the transform precoding may be indicated in a cell unit. For example, the indication message may include information on serving cells (e.g., serving cell information, and system information of a gNB-DU). The indication message may include information on a serving cell to be added or a serving cell to be modified. The indication message may include DU identification information (e.g., a gNB-DU ID).

According to an embodiment, the indication message may be a 'NETWORK ACCESS RATE REDUCTION' message. The indication message may include at least one of the information indicating whether the transform precoding (e.g., the transform precoding 701) is activated, the information (e.g., the TAI list) on the geographic area in which the transform precoding is to be used, and the information (e.g., the timer) on the time when the transform precoding is activated. The indication message may further include information (e.g., a public land mobile network (PLMN) identifier, a UAC type, an access category, and an access identifier) for setting parameters for unified access class (uac) barring.

According to an embodiment, the indication message may be a 'RESOURCE STATUS REQUEST' message. The indication message may include at least one of the information indicating whether the transform precoding (e.g., the transform precoding 701) is activated, the information (e.g., the TAI list) on the geographic area in which the transform precoding is to be used, and the information (e.g., the timer) on the time when the transform precoding is activated. Whether to activate the transform precoding may be indicated in the cell unit. The indication message may include cell information, slice information, and/or beam information (e.g., a SS/PBCH block (SSB) index).

According to an embodiment, the indication message may be a 'UE CONTEXT SETUP REQUEST' message. The indication message may include at least one of the information indicating whether the transform precoding (e.g., the transform precoding 701) is activated, the information (e.g., the TAI list) on the geographic area in which the transform precoding is to be used, and the information (e.g., the timer) on the time when the transform precoding is activated. Whether to activate the transform precoding may be indicated in the cell unit. The indication message may include a gBNB-CU UE F1AP ID, a gNB-DU UE F1AP ID, a SpCell ID (e.g., a primary cell (PCell) of a master cell group (MCG) and a PCell of a secondary cell group (SCG)), information on a secondary cell (Scell) index, a discontinuous reception (DRX) cycle, signaling radio bearer (SRB) information, and/or data radio bearer (DRB) information, and the like.

According to an embodiment, the indication message may be a 'UE CONTEXT MODIFICATION REQUEST' message. The indication message may include at least one of the information indicating whether the transform precoding (e.g., the transform precoding 701) is activated, the information (e.g., the TAI list) on the geographic area in which the transform precoding is to be used, and the information (e.g., the timer) on the time when the transform precoding is activated. Whether to activate the transform precoding may be indicated in the cell unit. The indication message may include the gBNB-CU UE F1AP ID, the gNB-DU UE F1AP ID, the SpCell ID (e.g., the primary cell (PCell) of the master cell group (MCG) and the PCell of the secondary cell group (SCG)), the discontinuous reception (DRX) cycle, a secondary cell (Scell) index, and/or information on a RRC container. The RRC container may include a message including the RRC configuration information of FIG. 8 as it is.

According to an embodiment, the indication message may be a 'DL RRC MESSAGE TRANSFER' message. The indication message may include at least one of the information indicating whether the transform precoding (e.g., the transform precoding 701) is activated, the information (e.g., the TAI list) on the geographic area in which the transform precoding is to be used, and the information (e.g., the timer) on the time when the transform precoding is activated. Whether to activate the transform precoding may be indicated in the cell unit. The indication message may include the gBNB-CU UE F1AP ID, the gNB-DU UE F1AP ID, and/or the RRC container. The RRC container may include the message including the RRC configuration information of FIG. 8 as it is.

According to an embodiment, the indication message may be a 'WRITE-REPLACE WARNING REQUEST' message. The indication message may include at least one of the information indicating whether the transform precoding (e.g., the transform precoding 701) is activated, the information (e.g., the TAI list) on the geographic area in which the transform precoding is to be used, and the information (e.g., the timer) on the time when the transform precoding is activated. Whether to activate the transform precoding may be indicated in the cell unit. The instruction message may include public warning system (PWS) information (e.g., system information block (SIB) 6, 7, 8), a repetition period, information on the number of broadcasts, and cell information (e.g., CGI).

## 2. Satellite ON/OFF

Examples of changing the waveform setting from the CP-OFDM scheme to the DFT-S OFDM scheme or from the DFT-S OFDM scheme to the CP-OFDM scheme according to a state of the satellite 620 is described through FIG. 7, FIG. 8, FIG. 9A, and FIG. 9B. The downlink transmission using the DFT-S OFDM scheme is advantageous in terms of satellite power efficiency. Meanwhile, by deactivating a satellite determined to be unnecessary or a cell provided by the satellite, power saving of the satellite may be achieved. Hereinafter, through FIG. 10 to FIG. 13, technologies for increasing power efficiency in a non-terrestrial network through deactivation or activation of the satellite or the cell provided by the satellite will be described.

FIG. 10 illustrates an example of a selection procedure of an inactive satellite. The same reference numbers may indicate an application of the same description.

In an operation 1001, an AMF 640 may identify satellites corresponding to a sector. Herein, the sector may indicate a geographic area. A satellite may provide a service for various geographic areas on a celestial body. For example, a geographical area of a region served by a cell in 3GPP may correspond to a tracking area (TA) to manage mobility of UE 610. A tracking area identity (TAI) may be specified by a mobile country code (MCC), a mobile network code (MNC), and a tracking area code (TAC). For example, the geographic area may correspond to the tracking area code (TAC). The AMF 640 may identify satellites related to the geographic area. For another example, the geographic area may be a space area defined according to an orbit of the satellite. The space area may be a unit physically dividing a position of the satellite in a sphere shape surrounding the outside of the celestial body. As the orbit of the satellite is higher from a center of the celestial body, the shape of the sphere surrounding the outside may be larger. As the orbit is higher, the number of the space areas may increase, or extent in a unit space area may increase. The AMF 640 may identify satellites related to the space area. For another example, the geographic area may be an area arbitrarily defined by a business operator managing the satellite. The business operator may manage the geographic area through an area type, a list of serviceable satellites, and/or a set of beams of the serviceable satellites. The geographic area may be specified by a type, a list of satellite(s), and/or a list of beam(s). The AMF 640 may identify satellites included in the list of the satellite(s).

In an operation 1003, the AMF 640 may identify a satellite based on prediction information. The AMF 640 may identify the satellite based on the prediction information among the satellites corresponding to the sector. The satellite indicates a satellite to be deactivated. The prediction information indicates information related to a satellite expected at a specific time point in the future. According to an embodiment, the prediction information may indicate information on an area in which the satellite is expected to be located at a specific time when considering an orbit of the satellite. The time may indicate a season, a month, a day, a year, or a specific time zone of the day. For example, the area may be divided into the tracking area (TA) defined in 3GPP. For example, the area may be divided by a geographic code (e.g., zip code). For example, information on the area may indicate a type of the area. The type of the area may indicate whether it is a continent, an ocean, or an area in which the continent and the sea are mixed. As a non-limiting example, the area may indicate a ratio of the continent to the ocean. According to an embodiment, the prediction information may include information on an attribute for each time. For example, the time may be a season, a month, a day, or a year. For example, the time may indicate a specific time zone (e.g., late night time, working time) of the day. For example, the attribute may include information on a load of a satellite. As a non-limiting example, the load of the satellite may indicate the number of terminals connected to a cell provided by the satellite. The attribute may indicate a load for each cell of the satellite. The satellite may support one or more frequency bands. The attribute may indicate a load for each frequency band (e.g., each cell) in the satellite.

The AMF 640 may identify a satellite. The satellite indicates a satellite selected for deactivation among satellites managed by the AMF 640. The AMF 640 may identify a satellite to be deactivated from among satellites corresponding to the sector of the operation 1001. For example, the satellites corresponding to the sector may include satellites configured to service TAs of a specific TAI list. A specific TA may be associated with a middle of the Pacific Ocean. Satellites capable of providing a service at a specific time in the middle of the Pacific Ocean may be five. In this case, the AMF 640 may determine to deactivate four satellites. Therefore, the AMF 640 may identify the four satellites as satellites to be deactivated. For example, the satellites corresponding to the sector may include satellites associated with a specific space area. The specific space area may be in a middle of a city center. At a specific time (e.g., late night time), satellites that may be serviced through the specific space area may be 120. When considering in terms of a reduced amount of communication of users in the late night time zone, the AMF 640 may determine to deactivate partial satellites. As an example, the AMF 640 may identify 60 satellites as satellites to be deactivated. For example, the satellites corresponding to the sector may include satellites configured to service an area separately defined by the business operator. For example, the area may indicate a desert. Since the number of users is relatively small in the desert, the relatively small number of satellites may be required. Satellites available in the desert may be 100. In order to save power of unnecessary satellites in the desert, the AMF 640 may determine to deactivate partial satellites. As an example, the AMF 640 may identify 90 satellites as satellites to be deactivated.

In an operation 1005, the AMF 640 may transmit a control signal to a satellite 620. The control signal may indicate deactivation of the satellite 620. The control signal may include a deactivation command. The control signal may provide various information as well as activation/deactivation.

According to an embodiment, the control signal may indicate a deactivation range of a satellite. The satellite may not be deactivated unconditionally according to the control signal, but the satellite may be deactivated according to the deactivation range. For example, the deactivation range may be defined in a cell unit. The control signal may include a cell identifier to be deactivated together with the deactivation command. For example, the deactivation range may be defined in a DRB unit. The control signal may include a DRB identifier to be deactivated together with the deactivation command. For example, the deactivation range may be defined in an SRB unit. The control signal may include an SRB identifier to be deactivated together with the deactivation command. For example, the deactivation range may be defined in a DU unit. The control signal may include a DU ID to be deactivated together with the deactivation command.

According to an embodiment, the control signal may indicate a deactivation time of a satellite. For example, the control signal may include information on a timer. The information on the timer may indicate a time period (e.g., a length of the timer) in which the satellite is deactivated. The timer may start from a time point when the control signal is transmitted. When the timer expires, the satellite may be activated again.

According to an embodiment, the control signal may indicate an inactive area of a satellite. The satellite may not be deactivated unconditionally according to the control signal, but the satellite may be deactivated in a case of entering the deactivation area. For example, the inactive area may be indicated by a TAI list. The control signal may include the TAI list. For example, the inactive area may be indicated by the TAI. The control signal may include the TAI. For example, the inactive area may be indicated by the TAC. The control signal may include the TAC. For example, the inactive area may be indicated by an identifier of a space area. The control signal may include the identifier. For example, the inactive area may be an area defined by a business operator, and the control signal may include a type of the area, an identifier for the area, and/or a list of satellites provided through the area.

According to one embodiment, the control signal may indicate a frequency band that is a target for deactivation of a satellite. For example, the frequency band may indicate a frequency band supporting satellite communication. The control signal may indicate a specific band to be deactivated among frequency bands supporting satellite communication. For example, the frequency band may be related to a cell. The control signal may indicate a cell to be deactivated among cells corresponding to specific frequency bands.

According to an embodiment, the control signal may include information on a type of an area in which a satellite is to be deactivated. The satellite may not unconditionally deactivated according to the control signal, but the satellite may be deactivated, in a case of entering an area of a specific type. For example, the type may indicate whether it is a continent or an ocean, a city center or an outskirts, or a ratio of a terrestrial network to a non-terrestrial network.

According to an embodiment, the control signal may include information on a cause of deactivation of a satellite. The control signal may include information on a cause of why the satellite is deactivated. For example, the cause may be indicated by one of the following values.

- Deactivation due to orbital movement
- Resource optimisation
- Reduce load in serving cell,
- User inactivity,
- Service Area Type (e.g., sea, land, desert, island)
- Low traffic on cell
- Low traffic on frequency band
- Low traffic on service area

Although the deactivation of the satellite is described as an example in FIG. 10, embodiments of the present disclosure are not limited thereto. The sector and the prediction information described with reference to FIG. 10 may be used for activation of the satellite. The AMF 640 may identify satellites corresponding to the sector and identify satellites to be activated from among the satellites. The AMF 640 may transmit the control signal for indicating activation to the satellite.

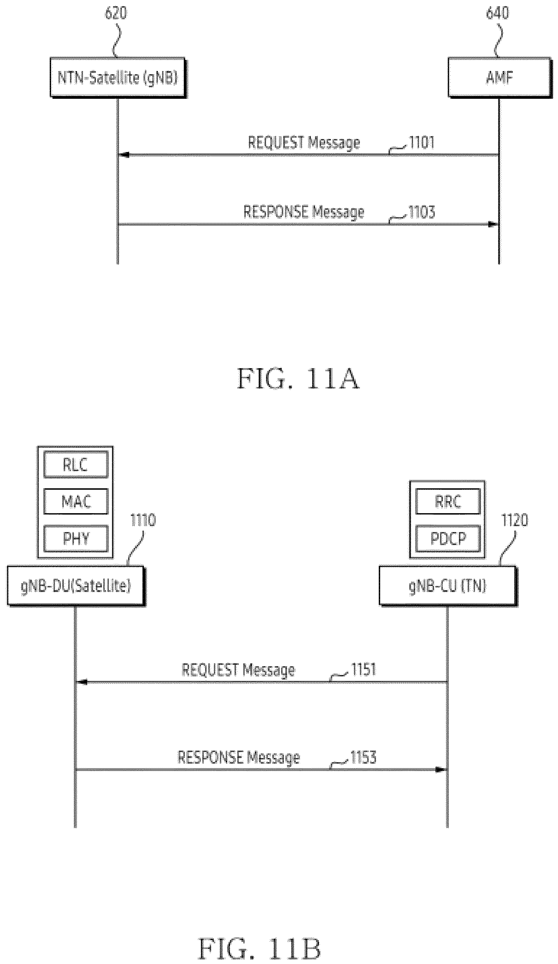

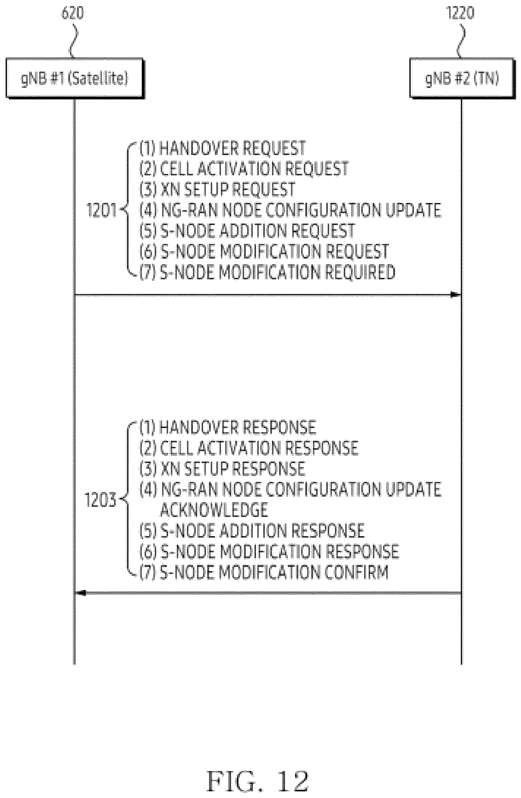

Operations between the AMF 640 and the satellite 620 is described in FIG. 10, but embodiments of the present disclosure are not limited thereto. An entity for managing a satellite may be used instead of the AMF 640. For example, in a case that a plurality of DUs are connected to a CU, and each DU corresponds to a satellite, the CU may identify the satellite (or the satellite to be activated) to be deactivated and transmit the control signal to the DU corresponding to the identified satellite. The control signal may be defined on an F1 interface. An example of a detailed message may be defined through FIG. 11B. For example, satellites may form a group. The group may include a master satellite and one or more slave satellites. The master satellite in the group may identify a slave satellite (or a slave satellite to be activated) to be deactivated and transmit the control signal to the identified slave satellite. The control signal may be defined on an XN interface. An example of the detailed message may be defined through FIG. 12.

Deactivation indication information (e.g., 'deactivation indication' IE) of the control signal of the operation 1005 may be displayed, for example, in the following format.

[Table 7]

| IE/Group Name | IE type and reference | Semantics description |
|---|---|---|
| Deactivation command | {Deactivation, Activation} | Indication of deactivation of satellite |
| Cell list | | Indication of cells to be deactivated |
| DRB ID | | Indication of DRBs to be deactivated |
| SRB ID | | Indication of SRBs to be deactivated |
| Timer | | Deactivation Timer |
| gNB DU ID | | DU to be deactivated |
| Service Area | | Service Area to be deactivated(e.g., TAI, TAC, (space area, other ID) |
| Frequency Band | | Frequency band to be deactivated |
| Area Type | | Service Area type (e q., sea, land, desert) |
| Cause | | Cause of Deactivation of satellite |

Activation indication information (e.g., 'activation indication' IE) of the control signal of the operation 1005 may be displayed, for example, in the following format.

[Table 8]

| IE/Group Name | IE type and reference | Semantics description |
|---|---|---|
| Activation command | {Activation, Deactivation} | Indication of activation of satellite |
| Cell list | | Indication of cells to be activated |
| DRB ID | | Indication of DRBs to be activated |

(continued)

| IE/Group Name | IE type and reference | Semantics description |
|---|---|---|
| SRB ID | | Indication of SRBs to be activated |
| Timer | | Activation Timer |
| gNB DU ID | | DU to be activated |
| Service Area | | Service Area to be activated(e.g., TAI, TAC, (space area, other ID) |
| Frequency Band | | Frequency band to be activated |
| Area Type | | Service Area type (e q., sea, land, desert) |
| Cause | | Cause of activation of satellite |

FIG. 11A illustrates an example of signaling through an NG interface for indicating an inactive satellite. The same reference numbers may indicate an application of the same description.

Referring to FIG. 11A, in an operation 1101, an AMF 640 may transmit a request message to a satellite 620. The request message may include a deactivation command (or an activation command). The request message may indicate a deactivation range (e.g., a cell identifier, a DRB identifier, an SRB identifier, and/or a DU ID) of a satellite. The request message may include information (or information on an activation time) on a deactivation time. The request message may include information (or information on an active area) on an inactive area. In a case of entering the inactive area, a satellite receiving the control signal may be deactivated. The request message may indicate a frequency band (or a frequency band to be activated) to be deactivated of a satellite. The request message may include information on a type of an area (or an area to be activated) in which a satellite is to be deactivated. The request message may include information on the type of the area in which the satellite is to be deactivated.

In an operation 1103, the satellite 620 may transmit a response message to the AMF 640.

The request message and the response message may be messages separately defined for deactivation of a satellite or may be used together with messages defined in a TS 38.413 standard.

According to an embodiment, the request message may be a 'PDU SESSION RESOURCE SETUP REQUEST' message, and the response message may be a 'PDU SESSION RESOURCE SETUP RESPONSE' message.

[Table 9]

| IE/Group Name | Presence | Range | IE type and reference | Semantics description | Criticality | Assigned Criticality |
|---|---|---|---|---|---|---|
| Message Type | M | | 9.3.1.1 | | YES | reject |
| AMF UE NGAP ID | M | | 9.3.3.1 | | YES | reject |
| RAN UE NGAP ID | M | | 9.3.3.2 | | YES | reject |
| RAN Paging Priority | O | | 9.3.3.15 | | YES | ignore |
| NAS-PDU | O | | 9.3.3.4 | | YES | reject |
| PDU Session Resource Setup Request List | | 1 | | | YES | reject |

(continued)

| IE/Group Name | Presence | Range | IE type and reference | Semantics description | Criticality | Assigned Criticality |
|---|---|---|---|---|---|---|
| >PDU Session Resource Setup Request Item | | 1..<maxnoofPDUSessions> | | | - | |
| >>PDU Session ID | M | | 9.3.1.50 | | - | |
| >>PDU Session NAS-PDU | O | | NAS-PDU 9.3.3.4 | | - | |
| >>S-NSSAI | M | | 9.3.1.24 | | - | |
| >>PDU Session Resource Setup Request Transfer | M | | OCTET STRING | Containing the PDU Session Resource Setup Request Transfer IE specified in subclause 9.3.4.1. | - | |
| UE Aggregate Maximum Bit Rate | O | | 9.3.1.58 | | YES | ignore |
| Deactivation command | O | | | Indication of deactivation of satellite | | |
| Cell list | O | | | Indication of cells to be deactivated | | |
| DRB ID | O | | | Indication of DRBs to be deactivated | | |
| SRB ID | O | | | Indication of SRBs to be deactivated | | |
| Timer | O | | | Deactivation Timer | | |
| gNB DU ID | O | | | DU to be deactivated | | |
| Service Area | O | | | Service Area to be deactivated(e.g. , TAI, TAC, (space area, other ID) | | |
| Frequency Band | O | | | Frequency band to be deactivated | | |
| Area Type | O | | | Service Area type (e.g.,, sea, land, desert) | | |
| Cause | O | | | Cause of Deactivation of satellite | | |

For IEs according to the Table 9, the Table 7 for deactivation indication and a 3GPP TS 38.413 standard may be referenced.

According to an embodiment, the request message may be a 'PDU SESSION RESOURCE MODIFY REQUEST' message, and the response message may be a 'PDU SESSION RESOURCE MODIFY RESPONSE' message.

[Table 10]

| IE/Group Name | Presence | Range | IE type and reference | Semantics description | Criticality | Assigned Criticality |
|---|---|---|---|---|---|---|
| Message Type | M | | 9.3.1.1 | | YES | reject |
| AMF UE NGAP ID | M | | 9.3.3.1 | | YES | reject |
| RAN UE NGAP ID | M | | 9.3.3.2 | | YES | reject |
| RAN Paging Priority | O | | 9.3.3.15 | | YES | ignore |
| PDU Session Resource Modify Request List | | 1 | | | YES | reject |
| >PDU Session Resource Modify Request Item | | 1..<maxnoofPDUSessions> | | | - | |
| >>PDU Session ID | M | | 9.3.1.50 | | - | |
| >>NAS-PDU | O | | 9.3.3.4 | | - | |
| >>PDU Session Resource Modify Request Transfer | M | | OCTET STRING | Containing the PDU Session Resource Modify Request Transfer IE specified in subclause 9.3.4.3. | - | |
| >>S-NSSAI | O | | 9.3.1.24 | | YES | reject |
| Deactivatio n command | O | | | Indication of deactivation of satellite | | |
| Cell list | O | | | Indication of cells to be deactivated | | |
| DRB ID | O | | | Indication of DRBs to be deactivated | | |
| SRB ID | O | | | Indication of SRBs to be deactivated | | |
| Timer | O | | | Deactivation Timer | | |
| gNB DU ID | O | | | DU to be deactivated | | |
| Service Area | O | | | Service Area to be deactivated(e.g. , TAI, TAC, (space area, other ID) | | |

(continued)

| IE/Group Name | Presence | Range | IE type and reference | Semantics description | Criticality | Assigned Criticality |
|---|---|---|---|---|---|---|
| Frequency Band | O | | | Frequency band to be deactivated | | |
| Area Type | O | | | Service Area type (e.g.,, sea, land, desert) | | |
| Cause | O | | | Cause of Deactivation of satellite | | |

For IEs according to the Table 10, the Table 7 for the 3GPP TS 38.413 standard and the deactivation indication may be referenced.

According to an embodiment, the request message may be an 'AMF CONFIGURATION UPDATE' message, and the response message may be an 'AMF CONFIGURATION UPDATE ACKNOWLEDGE' message.

[Table 11]

| IE/Group Name | Presence | Range | IE type and reference | Semantics description | Criticality | Assigned Criticality |
|---|---|---|---|---|---|---|
| Message Type | M | | 9.3.1.1 | | YES | reject |
| AMF Name | O | | 9.3.3.21 | | YES | reject |
| Served GUAMI List | | 0..1 | | | YES | reject |
| >Served GUAMI Item | | 1 ..<maxnoofServedGUAMIs> | | | - | |
| >>GUAMI | M | | 9.3.3.3 | | - | |
| >>Backup AMF Name | O | | AMF Name 9.3.3.21 | | - | |
| >>GUAMI Type | O | | ENUMERATED (native, mapped, ...) | | YES | ignore |
| Relative AMF Capacity | O | | 9.3.1.32 | | YES | ignore |
| PLMN Support List | | 0..1 | | | YES | reject |
| >PLMN Support Item | | 1 ..<maxnoofPLMNs> | | | - | |
| >>PLMN Identity | M | | 9.3.3.5 | | - | |

(continued)

| IE/Group Name | Presence | Range | IE type and reference | Semantics description | Criticality | Assigned Criticality |
|---|---|---|---|---|---|---|
| >>Slice Support List | M | | 9.3.1.17 | Supported S-NSSAIs per PLMN or per SNPN. | - | |
| >>NPN Support | O | | 9.3.3.44 | If the NID IE is included, it identifies a SNPN together with the PLMN Identity IE. | YES | reject |
| >>Extended Slice Support List | O | | 9.3.1.191 | Additional Supported S-NSSAIs per PLMN | YES | reject |
| AMF TNL Association to Add List | | 0..1 | | | YES | ignore |
| >AMF TNL Association to Add Item | | 1..<maxnoofTNLAssociations> | | | - | |
| >>AMF TNL Association Address | M | | CP Transport Layer Information 9.3.2.6 | AMF Transport Layer information used to set up the new TNL association. | - | |
| >>TNL Association Usage | O | | 9.3.2.9 | | - | |
| >>TNL Address Weight Factor | M | | 9.3.2.10 | | - | |
| AMF TNL Association to Remove List | | 0..1 | | | YES | ignore |
| >AMF TNL Association to Remove Item | | 1..<maxnoofTNLAssociations> | | | - | |
| >>AMF TNL Association Address | M | | CP Transport Layer Information 9.3.2.6 | Transport Layer Address of the AMF. | - | |

(continued)

| IE/Group Name | Presence | Range | IE type and reference | Semantics description | Criticality | Assigned Criticality |
|---|---|---|---|---|---|---|
| >>TNL Association Transport Layer Address NG-RAN | O | | CP Transport Layer Address 9.3.2.6 | Transport Layer Address of the NG-RAN node. | YES | reject |
| AMF TNL Association to Update List | | 0..1 | | | YES | ignore |
| >AMF TNL Association to Update Item | | 1..<maxnoofTNLAssociations> | | | - | |
| >>AMF TNL Association Address | M | | CP Transport Layer Information 9.3.2.6 | AMF Transport Layer information used to identify the TNL association to be updated. | - | |
| >>TNL Association Usage | O | | 9.3.2.9 | | - | |
| >>TNL Address Weight Factor | O | | 9.3.2.10 | | - | |
| Extended AMF Name | O | | 9.3.3.51 | | YES | ignore |
| Deactivation command | O | | | Indication of deactivation of satellite | | |
| Cell list | O | | | Indication of cells to be deactivated | | |
| DRB ID | O | | | Indication of DRBs to be deactivated | | |
| SRB ID | O | | | Indication of SRBs to be deactivated | | |
| Timer | O | | | Deactivation Timer | | |
| gNB DU ID | O | | | DU to be deactivated | | |
| Service Area | O | | | Service Area to be deactivated(e. g., TAI, TAC, (space area, other ID) | | |

(continued)

| IE/Group Name | Presence | Range | IE type and reference | Semantics description | Criticality | Assigned Criticality |
|---|---|---|---|---|---|---|
| Frequency Band | O | | | Frequency band to be deactivated | | |
| Area Type | O | | | Service Area type (e.g.,, sea, land, desert) | | |
| Cause | O | | | Cause of Deactivation of satellite | | |

For IEs according to the Table 11, the Table 7 for the 3GPP TS 38.413 standard and the deactivation indication may be referenced.

FIG. 11B illustrates an example of signaling through an F1 interface for indicating an inactive satellite. The same reference numbers may indicate an application of the same description.

Referring to FIG. 11B, in an operation 1151, a gNB-CU 1120 may transmit a request message for a waveform setting to a gNB-DU 1100 corresponding to a satellite (e.g., a satellite 620). Herein, the gNB-DU 1100 performs a DU function of the satellite 620. The request message may include a deactivation command (or an activation command). The request message may indicate a deactivation range (e.g., a cell identifier, a DRB identifier, an SRB identifier, and/or a DU ID) of a satellite. The request message may include information (or information on an activation time) on a deactivation time. The request message may include information (or information on an active area) on an inactive area. In a case of entering the inactive area, a satellite receiving the control signal may be deactivated. The request message may indicate a frequency band (or a frequency band to be activated) to be deactivated of a satellite. The request message may include information on a type of an area (or an area to be activated) in which a satellite is to be deactivated. The request message may include information on the type of the area in which the satellite is to be deactivated.

In an operation 1153, the gNB-DU 1110 corresponding to the satellite (e.g., the satellite 620) may transmit a response message to the gNB-CU 1120.

The request message and the response message may be messages separately defined for deactivation of a satellite or may be used together with messages defined in a TS 38.473 standard.

According to an embodiment, the request message may be a GNB-CU configuration update message, and the response message may be a gNB-CU configuration update confirmation message. A gNB-CU 1120 may transmit the gNB-CU configuration update message to a gNB-DU 1110 through the F1 interface. The gNB-DU 1110 may transmit the GNB-CU configuration update confirmation message to the gNB-CU 1120 through the F1 interface. The GNB-CU configuration update message may include at least one of the information in the Table 7 or the Table 8. For example, the request message may include the following IEs as exemplified in Table 12.

[Table 12]

| IE/Group Name | Presence | Range | IE type and reference | Semantics description | Criticality | Assigned Criticality |
|---|---|---|---|---|---|---|
| Message Type | M | | 9.3.1.1 | | YES | reject |
| Transaction ID | M | | 9.3.1.23 | | YES | reject |
| **Cells to be Activated List** | | *0..1* | | List of cells to be activated or modified | YES | reject |
| **>Cells to be Activated List Item** | | *1.. <maxCellingNBDU>* | | | EACH | reject |
| >> NR CGI | M | | 9.3.1.12 | | - | |
| >> NR PCI | O | | INTEGER (0..1007) | Physical Cell ID | - | |
| >> gNB-CU System Informatio n | O | | 9.3.1.42 | RRC container with system information owned by gNB-CU | YES | reject |
| >>Availab le PLMN List | O | | 9.3.1.65 | | YES | ignore |
| >>Extend ed Available PLMN List | O | | 9.3.1.76 | This is included if *Available PLMN List* IE is included and if more than 6 Available PLMNs is to be signalled. | YES | ignore |
| >>IAB Info IAB-donor-CU | O | | 9.3.1.105 | IAB-related configuratio n sent by the IAB-donor- CU. | YES | ignore |
| >>Availab le SNPN ID List | O | | 9.3.1.163 | Indicates the available SNPN ID list. If this IE is included, the content of the *Available PLMN List* IE and *Extended Available PLMN List* IE if present in the *Cells to be Activated List Item* IE is ignored. | YES | ignore |
| >>MBS Broadcas t Neighbou r Cell List | O | | 9.3.1.226 | | YES | ignore |
| **Cells to be Deactivated List** | | *0..1* | | List of cells to be deactivated | YES | reject |
| **>Cells to be Deactivate d List Item** | | *1.. <maxCellingNBDU>* | | | EACH | reject |
| >>NR CGI | M | | 9.3.1.12 | | - | |
| **gNB-CU TNL Association To Add List** | | *0..1* | | | YES | ignore |

| IE/Group Name | Presence | Range | IE type and reference | Semantics description | Criticality | Assigned Criticality |
|---|---|---|---|---|---|---|
| >gNB-CU TNL Associatio n To Add Item IEs | | 1..<maxnoofTNLAssociations> | | | EACH | ignore |
| >>TNL Associati on Transport Layer Informatio n | M | | CP Transport Layer Address 9.3.2.4 | Transport Layer Address of the gNB-CU. | - | |
| >>TNL Associati on Usage | M | | ENUMERATED (ue, non-ue, both, ...) | Indicates whether the TNL association is only used for UE-associated signalling, or non-UE-associated signalling, or both. For usage of this IE, refer to TS 38.472 [22]. | - | |
| gNB-CU TNL Association To Remove List | | 0..1 | | | YES | ignore |
| >gNB-CU TNL Associatio n To Remove Item IEs | | 1..<maxnoofTNLAssociation> | | | EACH | ignore |
| >>TNL Associati on Transport Layer Address | M | | CP Transport Layer Address 9.3.2.4 | Transport Layer Address of the gNB-CU. | - | |
| >>TNL Associati on Transport Layer Address gNB-DU | O | | CP Transport Layer Address 9.3.2.4 | Transport Layer Address of the gNB-DU. | YES | reject |
| gNB-CU TNL Association To Update List | | 0..1 | | | YES | ignore |
| >gNB-CU TNL Associatio n To Update Item IEs | | 1..<maxnoofTNLAssociations> | | | EACH | ignore |
| >>TNL Associati on Transport Layer Address | M | | CP Transport Layer Address 9.3.2.4 | Transport Layer Address of the gNB-CU. | - | |

| IE/Group Name | Presence | Range | IE type and reference | Semantics description | Criticality | Assigned Criticality |
|---|---|---|---|---|---|---|
| >>TNL Association Usage | O | | ENUMERATED (ue, non-ue, both, ...) | Indicates whether the TNL association is only used for UE-associated signalling, or non-UE-associated signalling, or both. For usage of this IE, refer to TS 38.472 [22]. | - | |
| Cells to be barred List | | 0..1 | | List of cells to be barred. | YES | ignore |
| >Cells to be barred List Item | | 1.. <maxCellingNBDU> | | | EACH | ignore |
| >>NR CGI | M | | 9.3.1.12 | | - | |
| >>Cell Barred | M | | ENUMERATED (barred, not-barred, ...) | | - | |
| >>IAB Barred | O | | ENUMERATED (barred, not-barred, ...) | | - | |
| Protected E-UTRA Resources List | | 0..1 | | List of Protected E-UTRA Resources. | YES | reject |
| >Protected E-UTRA Resources List Item | | 1.. <maxCellineNB> | | | EACH | reject |
| >>Spectrum Sharing Group ID | M | | INTEGER (1.. maxCellineNB) | Indicates the E-UTRA cells involved in resource coordination with the NR cells affiliated with the same Spectrum Sharing Group ID. | - | |
| >> E-UTRA Cells List | | 1 | | List of applicable E-UTRA cells. | - | |
| >>> E-UTRA Cells List Item | | 1 .. <maxCellineNB> | | | - | |
| >>>>E UTRA Cell ID | M | | BIT STRING (SIZE(28)) | Indicates the E-UTRAN Cell Identifier IE contained in the ECGI as defined in subclause 9.2.14 in TS 36.423 [9]. | - | |
| >>>>Served E-UTRA Cell Information | M | | 9.3.1.64 | | - | |

| IE/Group Name | Presence | Range | IE type and reference | Semantics description | Criticality | Assigned Criticality |
|---|---|---|---|---|---|---|
| **Neighbour Cell Information List** | | *0..1* | | | YES | ignore |
| **>Neighbour Cell Information List Item** | | *1 .. <maxCellingNBDU>* | | | EACH | ignore |
| >>NR CGI | M | | 9.3.1.12 | | - | |
| >>Intend ed TDD DL-UL Configuration | O | | 9.3.1.89 | | | |
| Transport Layer Address Info | O | | 9.3.2.5 | | YES | ignore |
| Uplink BH Non-UP Traffic Mapping | O | | 9.3.1.103 | | YES | reject |
| BAP Address | O | | 9.3.1.111 | Indicates a BAP address assigned to the IAB-donor-DU. | YES | ignore |
| CCO Assistance Information | O | | 9.3.1.211 | Indicates CCO Assistance Information for cells and beams served by the gNB-DU of the same NG-RAN node or for cells and beams not served by the gNB-DU. | YES | Ignore |
| Cells for SON List | O | | 9.3.1.214 | | YES | ignore |
| gNB-CU Name | O | | PrintableString(SIZE(1..150,...)) | Human readable name of the gNB-CU. | YES | ignore |
| Extended gNB-CU Name | O | | 9.3.1.206 | | YES | ignore |
| Deactivation command | O | | | Indication of deactivation of satellite | | |
| Cell list | O | | | Indication of cells to be deactivated | | |
| DRB ID | O | | | Indication of DRBs to be deactivated | | |
| SRB ID | O | | | Indication of SRBs to be deactivated | | |
| Timer | O | | | Deactivation Timer | | |

(continued)

| IE/Group Name | Presence | Range | IE type and reference | Semantics description | Criticality | Assigned Criticality |
|---|---|---|---|---|---|---|
| gNB DU ID | O | | | DU to be deactivated | | |
| Service Area | O | | | Service Area to be deactivated( e.g., TAI, TAC, (space area, other ID) | | |
| Frequency Band | O | | | Frequency band to be deactivated | | |
| Area Type | O | | | Service Area type (e.g.,, sea, land, desert) | | |
| Cause | O | | | Cause of Deactivation of satellite | | |

For IEs according to the Table 12, the Table 7 for a 3GPP TS 38.473 standard and deactivation indication may be referenced.

FIG. 12 illustrates an example of signaling through an XN interface for indicating an inactive satellite. The same reference numbers may indicate an application of the same description. As a link between satellites, an inter-satellite link (ISL) may be used. A first base station (e.g., a RAN node, and a gNB) may correspond to a satellite 620, and a second base station (e.g., the RAN node, and the gNB) may correspond to a base station 1220 located on the ground.

Referring to FIG. 12, in an operation 1201, the satellite 620 may transmit a first message to the base station 1220 through the XN interface. The base station 1220 may receive the first message from the satellite 620.

In an operation 1203, the base station 1220 may transmit a second message to the satellite 620 through the XN interface. The satellite 620 may receive the second message from the base station 1220.

According to an embodiment, the first message may be a handover request message, and the second message may be a handover response message. The satellite 620 may transmit the handover request message to the base station 1220 through the XN interface. The base station 1220 may transmit the handover response message to the satellite 620 through the XN interface. The handover request message may include at least one of the information in the Table 7 and the Table 8. The handover response message may include at least one of the information in the Table 7 and the Table 8. For example, the first message may include the following IEs as exemplified in Table 13.

[Table 13]

| IE/Group Name | Presenc e | Rang e | IE type and reference | Semantics description | Criticalit y | Assigne d Criticalit y |
|---|---|---|---|---|---|---|
| Message Type | M | | 9.2.3.1 | | YES | reject |
| Source NG-RAN node UE XnAP ID reference | M | | NG-RAN node UE XnAP ID 9.2.3.16 | Allocated at the source NG-RAN node | YES | reject |
| Cause | M | | 9.2.3.2 | | YES | reject |
| Target Cell Global ID | M | | 9.2.3.25 | Includes either an E-UTRA CGI or an NR CGI | YES | reject |
| GUAMI | M | | 9.2.3.24 | | YES | reject |
| **UE Context Information** | | 1 | | | YES | reject |
| >NG-C UE as-sociated Sig-nalling refer-ence | M | | AMF UE NGAP ID 9.2.3.26 | Allocated at the AMF on the source NG-C connection. | - | |
| >Signalling TNL association address at source NG-C side | M | | CP Transport Layer Information 9.2.3.31 | This IE indicates the AMF's IP address of the SCTP association used at the source NG-C interface instance. Note: If no UE TNLA binding exists at the source NG-RAN node, the source NG-RAN node indicates the TNL association address it would have selected if it would have had to create a UE TNLA binding | - | |
| >UE Security Capabilities | M | | 9.2.3.49 | | - | |
| >AS Security Information | M | | 9.2.3.50 | | - | |

(continued)

| IE/Group Name | Presence | Range | IE type and reference | Semantics description | Criticality | Assigned Criticality |
|---|---|---|---|---|---|---|
| >Index to RAT/Frequency Selection Priority | O | | 9.2.3.23 | | - | |
| >UE Aggregate Maximum Bit Rate | M | | 9.2.3.17 | | - | |
| >PDU Session Resources To Be Setup List | | 1 | 9.2.1.1 | Similar to NG-C signalling, containing UL tunnel information per PDU Session Resource; and in addition, the source side QoS flow ⇔ DRB mapping | - | |
| >RRC Context | M | | OCTET STRING | Either includes the *HandoverPreparationInformati on* message as defined in subclause 10.2.2. of TS 36.331 [14], or the *HandoverPreparationInformati on-NB* message as defined in subclause 10.6.2 of TS 36.331 [14], if the target NG-RAN node is an ng-eNB, or the *HandoverPreparationInformati on* message as defined in subclause 11.2.2 of TS 38.331 [10], if the target NG-RAN node is a gNB. | - | |
| >Location Reporting Information | O | | 9.2.3.47 | Includes the necessary parameters for location reporting | - | |
| >Mobility Restriction List | O | | 9.2.3.53 | | - | |
| >5GC Mobility Restriction List Container | O | | 9.2.3.100 | | YES | ignore |
| >NR UE Sidelink Aggregate Maximum Bit Rate | O | | 9.2.3.107 | This IE applies only if the UE is authorized for NR V2X services. | YES | ignore |
| >LTE UE Sidelink Aggregate Maximum Bit Rate | O | | 9.2.3.108 | This IE applies only if the UE is authorized for LTE V2X services. | YES | ignore |
| >Management Based MDT PLMN List | O | | MDT PLMN List 9.2.3.133 | | YES | ignore |
| >UE Radio Capability ID | O | | 9.2.3.138 | | YES | reject |

(continued)

| IE/Group Name | Presence | Range | IE type and reference | Semantics description | Criticality | Assigned Criticality |
|---|---|---|---|---|---|---|
| >MBS Session Information List | O | | 9.2.1.36 | | YES | ignore |
| >5G ProSe UE PC5 Aggregate Maximum Bit Rate | O | | NR UE Sidelink Aggregate Maximum Bit Rate 9.2.3.107 | This IE applies only if the UE is authorized for 5G ProSe services. | YES | ignore |
| >UE Slice Maximum Bit Rate List | O | | 9.2.3.167 | | YES | ignore |
| Trace Activation | O | | 9.2.3.55 | | YES | ignore |
| Masked IMEISV | O | | 9.2.3.32 | | YES | ignore |
| UE History Information | M | | 9.2.3.64 | | YES | ignore |
| **UE Context Reference at the S-NG-RAN node** | O | | | | YES | ignore |
| >Global NG-RAN Node ID | M | | 9.2.2.3 | | - | |
| >S-NG-RAN node UE XnAP ID | M | | NG-RAN node UE XnAP ID 9.2.3.16 | | - | |
| **Conditional Handover Information Request** | O | | | | YES | reject |
| >CHO Trigger | M | | ENUMERATED (CHO-initiation, CHO-replace, ...) | | - | |
| >Target NG-RAN node UE XnAP ID | C-ifCHOmod | | NG-RAN node UE XnAP ID 9.2.3.16 | Allocated at the target NG-RAN node | - | |
| >Estimated Arrival Probability | O | | INTEGER (1..100) | | - | |
| NR V2X Services Authorized | O | | 9.2.3.105 | | YES | ignore |
| LTE V2X Services Authorized | O | | 9.2.3.106 | | YES | ignore |
| PC5 QoS Parameters | O | | 9.2.3.109 | This IE applies only if the UE is authorized for NR V2X services. | YES | ignore |
| Mobility Information | O | | BIT STRING (SIZE (32)) | Information related to the handover; the source NG-RAN node provides it in order to enable later analysis of the conditions that led to a wrong HO. | YES | ignore |

(continued)

| IE/Group Name | Presenc e | Rang e | IE type and reference | Semantics description | Criticalit y | Assigne d Criticalit y |
|---|---|---|---|---|---|---|
| UE History Infor- mation from the UE | O | | 9.2.3.110 | | YES | ignore |
| IAB Node Indication | O | | ENUMERATE D (true, ...) | | YES | reject |
| No PDU Session Indication | O | | ENUMERATE D (true, ...) | This IE applies only if the UE is an IAB-MT. | YES | ignore |
| Time Synchronisa- tion Assistance In- formation | O | | 9.2.3.153 | | YES | ignore |
| QMC Configuration Information | O | | 9.2.3.156 | | YES | ignore |
| 5G ProSe Authorized | O | | 9.2.3.159 | | YES | ignore |
| 5G ProSe PC5 QoS Parameters | O | | 9.2.3.160 | This IE applies only if the UE is authorized for 5G ProSe ser- vices. | YES | ignore |
| Deactivation com- mand | O | | | Indication of deactivation of satellite | | |
| Cell list | O | | | Indication of cells to be deactivated | | |
| DRB ID | O | | | Indication of DRBs to be deactivated | | |
| SRB ID | O | | | Indication of SRBs to be deactivated | | |
| Timer | O | | | Deactivation Timer | | |
| gNB DU ID | O | | | DU to be deactivated | | |
| Service Area | O | | | Service Area to be deactivated(e.g., TAI, TAC, (space area, other ID) | | |
| Frequency Band | O | | | Frequency band to be deactivated | | |
| Area Type | O | | | Service Area type (e.g.,, sea, land, desert) | | |
| Cause | O | | | Cause of Deactivation of satellite | | |

For IEs according to the Table 13, the Table 7 for a 3GPP TS 38.423 standard and deactivation indication may be referenced.

According to an embodiment, the first message may be a cell activation request message, and the second message may be a cell activation response message. The satellite 620 may transmit the cell activation request message to the base station 1220 through the XN interface. The base station 1220 may transmit the cell activation response message to the satellite 620 through the XN interface. The cell activation request message may include at least one of the information in the Table 7 and the Table 8. The cell activation response message may include at least one of the information in the Table 7 and the Table 8. For example, the first message may include the following IEs as exemplified in Table 14.

[Table 14]

| IE/Group Name | Presence | Range | IE type and reference | Semantics description | Criticality | Assigned Criticality |
|---|---|---|---|---|---|---|
| Message Type | M | | 9.2.3.1 | | YES | reject |
| CHOICE Served Cells To Activate | M | | | | YES | reject |
| >NR Cells | | | | | | |
| >>NR Cells List | | 1 | | | - | |
| >>>NR Cells item | | 1 .. < maxnoofCellsinNG-RANnode> | | | - | |
| >>>>NR CGI | M | | 9.2.2.7 | | - | |
| >E-UTRA Cells | | | | | - | |
| >>E-UTRA Cells List | | 1 | | | - | |
| >>>E-UTRA Cells item | | 1 .. < maxnoofCellsinNG-RANnode> | | | - | |
| >>>>E-UTRA CGI | M | | 9.2.2.8 | | - | |
| Activation ID | M | | INTEGER (0..255) | Allocated by the NG-RAN nodei | YES | reject |
| Interface Instance Indication | O | | 9.2.2.39 | | YES | reject |
| Deactivation command | O | | | Indication of deactivation of satellite | | |
| Cell list | O | | | Indication of cells to be deactivated | | |
| DRB ID | O | | | Indication of DRBs to be deactivated | | |
| SRB ID | O | | | Indication of SRBs to be deactivated | | |
| Timer | O | | | Deactivation Timer | | |
| gNB DU ID | O | | | DU to be deactivated | | |
| Service Area | O | | | Service Area to be deactivated(e.g., TAI, TAC, (space area, other ID) | | |
| Frequency Band | O | | | Frequency band to be deactivated | | |
| Area Type | O | | | Service Area type (e.g.,, sea, land, desert) | | |

(continued)

| IE/Group Name | Presence | Range | IE type and reference | Semantics description | Criticality | Assigned Criticality |
|---|---|---|---|---|---|---|
| Cause | O | | | Cause of Deactivation of satellite | | |

EP 4 568 136 A2

For IEs according to the Table 14, the Table 7 for the deactivation indication and the 3GPP TS 38.423 standard may be referenced.

According to an embodiment, the first message may be an XN setup request message, and the second message may be an XN setup response message. The satellite 620 may transmit the XN setup request message to the base station 1220 through the XN interface. The base station 1220 may transmit the XN setup response message to the satellite 620 through the XN interface. The XN setup request message may include at least one of the information in the Table 7 and the Table 8. The XN setup response message may include at least one of the information in the Table 7 and the Table 8. For example, the first message may include the following IEs as exemplified in Table 15.

[Table 15]

| IE/Group Name | Presence | Range | IE type and reference | Semantics description | Criticality | Assigned Criticality |
|---|---|---|---|---|---|---|
| Message Type | M | | 9.2.3.1 | | YES | reject |
| Global NG-RAN Node ID | M | | 9.2.2.3 | | YES | reject |
| TAI Support List | M | | 9.2.3.20 | List of supported TAs and associated characteristics. | YES | reject |
| AMF Region Information | M | | 9.2.3.83 | Contains a list of all the AMF Regions to which the NG-RAN node belongs. | YES | reject |
| **List of Served Cells NR** | | 0 .. <maxnoofCellsinNG-RAN node> | | Contains a list of cells served by the gNB. If a partial list of cells is signalled, it contains at least one cell per carrier configured at the gNB | YES | reject |
| >Served Cell Information NR | M | | 9.2.2.11 | | - | |
| >Neighbour Information NR | O | | 9.2.2.13 | | - | |
| >Neighbour Information E-UTRA | O | | 9.2.2.14 | | - | |
| >Served Cell Specific Info Request | O | | 9.2.2.102 | | YES | ignore |

(continued)

| IE/Group Name | Presence | Range | IE type and reference | Semantics description | Criticality | Assigned Criticality |
|---|---|---|---|---|---|---|
| **List of Served Cells E-UTRA** | | *0 .. <maxnoofCellsinNG-RAN node>* | | Contains a list of cells served by the ng-eNB. If a partial list of cells is signalled, it contains at least one cell per carrier configured at the ng-eNB | YES | reject |
| >Served Cell Information E-UTRA | M | | 9.2.2.12 | | - | |
| >Neighbour Information NR | O | | 9.2.2.13 | | - | |
| >Neighbour Information E-UTRA | O | | 9.2.2.14 | | - | |
| >SFN Offset | O | | 9.2.2.75 | Associated with the *ECGI* IE in the Served *Cell Information E-UTRA* IE | YES | ignore |
| Interface Instance Indication | O | | 9.2.2.39 | | YES | reject |
| TNL Configuration Info | O | | 9.2.3.96 | | YES | ignore |
| Partial List Indicator NR | O | | Partial List Indicator 9.2.2.46 | Value "partial" indicates that a partial list of cells is included in the *List of Served Cells NR* IE. | YES | ignore |
| Cell and Capacity Assistance Information NR | O | | 9.2.2.41 | Contains NR cell related assistance information. | YES | ignore |

(continued)

| IE/Group Name | Presence | Range | IE type and reference | Semantics description | Criticality | Assigned Criticality |
|---|---|---|---|---|---|---|
| Partial List Indicator E-UTRA | O | | Partial List Indicator 9.2.2.46 | Value "partial" indicates that a partial list of cells is included in the *List of Served Cells E-UTRA*. | YES | ignore |
| Cell and Capacity Assistance Information E-UTRA | O | | 9.2.2.42 | Contains E-UTRA cell related assistance information. | YES | ignore |
| Local NG-RAN Node Identifier | O | | 9.2.2.101 | | YES | ignore |
| **Neighbour NG-RAN Node List** | | 0.. <maxnoofNeighbourNG -RAN nodes> | | | YES | ignore |
| >Global NG-RAN Node ID | M | | 9.2.2.3 | | - | |
| >Local NG-RAN Node Identifier | M | | 9.2.2.101 | | - | |
| Deactivation command | O | | | Indication of deactivation of satellite | | |
| Cell list | O | | | Indication of cells to be deactivated | | |
| DRB ID | O | | | Indication of DRBs to be deactivated | | |
| SRB ID | O | | | Indication of SRBs to be deactivated | | |
| Timer | O | | | Deactivation Timer | | |
| gNB DU ID | ○ | | | DU to be deactivated | | |
| Service Area | ○ | | | Service Area to be deactivated (e.g. , TAI, TAC, (space area, other ID) | | |
| Frequency Band | ○ | | | Frequency band to be de-activated | | |

(continued)

| IE/Group Name | Presence | Range | IE type and reference | Semantics description | Criticality | Assigned Criticality |
|---|---|---|---|---|---|---|
| Area Type | ○ | | | Service Area type (e.g.,, sea, land, desert) | | |
| Cause | ○ | | | Cause of Deactivation of satellite | | |

For IEs according to the Table 15, the Table 7 for the deactivation indication and the 3GPP TS 38.423 standard may be referenced.

According to an embodiment, the first message may be an NG-RAN node configuration update message, and the second message may be an NG-RAN node configuration update confirmation message. The satellite 620 may transmit the NG-RAN node configuration update message to the base station 1220 through the XN interface. The base station 1220 may transmit the NG-RAN node configuration update confirmation message to the satellite 620 through the XN interface. The NG-RAN node configuration update message may include at least one of the information in the Table 7 and the Table 8. The NG-RAN node configuration update confirmation message may include at least one of the information in the Table 7 and the Table 8. For example, the first message may include the following IEs as exemplified in Table 16.

[Table 16]

| IE/Group Name | Presence | Range | IE type and reference | Semantic s descriptio n | Critic ality | Assig ned Critic ality |
|---|---|---|---|---|---|---|
| Message Type | M | | 9.2.3.1 | | YES | reject |
| TAI Support List | O | | 9.2.3.20 | List of supported TAs and associated characteris tics. | GLOB AL | reject |
| CHOICE *Initiating Node Type* | M | | | | YES | ignore |
| >*gNB* | | | | | | |
| >>Served Cells To Update NR | O | | 9.2.2.15 | | YES | ignore |
| >>Cell As-sistanc e In-formati on NR | O | | 9.2.2.17 | | YES | ignore |
| >>Cell As-sistanc e In-formati on E-UTRA | O | | 9.2.2.43 | | YES | ignore |
| >>Served Cell Specific Info Request | O | | 9.2.2.102 | | YES | ignore |
| >*ng-eNB* | | | | | | |
| >>Served Cells to Update E-UTRA | O | | 9.2.2.16 | | YES | ignore |
| >>Cell As-sistanc e In-formati on NR | O | | 9.2.2.17 | | YES | ignore |

42

| IE/Group Name | Presence | Range | IE type and reference | Semantic s descriptio n | Critic ality | Assig ned Critic ality |
|---|---|---|---|---|---|---|
| >>Cell As-sistanc e In-formati on E-UTRA | O | | 9.2.2.43 | | YES | ignore |
| **TNLA To Add List** | | *0..1* | | | YES | ignore |
| **>TNLA To Add Item** | | *1..<maxnoofTNLAs sociations>* | | | - | |
| >>TNLA Transport Layer Informati on | M | | CP Transport Layer Information 9.2.3.31 | CP Transport Layer Informatio n of NG-RAN node$_1$ | - | |
| >> TNL As-sociati on Usage | M | | 9.2.3.84 | | - | |
| **TNLA To Update List** | | *0..1* | | | YES | ignore |
| **>TNLA To Update Item** | | *1..<maxnoofTNLAs sociations>* | | | - | |
| >>TNLA Transport Layer Informati on | M | | CP Transport Layer Information 9.2.3.31 | CP Transport Layer Informatio n of NG-RAN node$_1$ | - | |
| >> TNL As-sociati on Usage | O | | 9.2.3.84 | | - | |
| **TNLA To Remove List** | | *0..1* | | | YES | ignore |
| **>TNLA To Remove Item** | | *1..<maxnoofTNLAs sociations>* | | | - | |

EP 4 568 136 A2

43

(continued)

| IE/Group Name | Presence | Range | IE type and reference | Semantics description | Criticality | Assigned Criticality |
|---|---|---|---|---|---|---|
| >>TNLA Transport Layer Information | M | | CP Transport Layer Information 9.2.3.31 | CP Transport Layer Information of NG-RAN node$_1$ | - | |
| Global NG-RAN Node ID | O | | 9.2.2.3 | | YES | reject |
| AMF Region Information To Add | O | | AMF Region Information 9.2.3.83 | List of all added AMF Regions to which the NG-RAN node belongs. | YES | reject |
| AMF Region Information To Delete | O | | AMF Region Information 9.2.3.83 | List of all deleted AMF Regions to which the NG-RAN node belongs. | YES | reject |
| Interface Instance Indication | O | | 9.2.2.39 | | YES | reject |
| TNL Configuration Info | O | | 9.2.3.96 | | YES | ignore |
| **Coverage Modification List** | | 0.. 1 | | List of cells with modified coverage. | GLOBAL | reject |
| **>Coverage Modification Item** | | 0.. <maxnoofCellsinNG -RAN node> | | | | |
| >>Global NG-RAN Cell Identity | M | | Global NG-RAN Cell Identity 9.2.2.27 | NG-RAN Cell Global Identifier of the cell to be modified. | - | |
| >>Cell Coverage State | M | | INTEGER (0..63, ...) | Value '0' indicates that the cell is inactive. Other values Indicates that the cell is active and also indicates the coverage configuration of the concerned cell. | - | |
| >>Cell Deployment Status Indicator | O | | ENUMERATED(pre-change-notification, ...) | Indicates the Cell Coverage State is planned to be used at the next reconfiguration. | - | |

44

(continued)

| IE/Group Name | Presence | Range | IE type and reference | Semantic s descriptio n | Critic ality | Assig ned Critic ality |
|---|---|---|---|---|---|---|
| **>>Cell Replacin g Info** | *C-ifCellDeploymentStatusIn dicatorPresent* | | | | - | |
| **>>>Rep la- cing Cells** | | *0.. <maxnoofCell- sinNG -RAN node>* | | | - | |
| >>>> Global NG-RAN Cell Identit y | | | Global NG-RAN Cell Identity 9.2.2.27 | NG-RAN Cell Global Identifier of a cell that may replace all or part of the coverage of the cell to be modified. | - | |
| **>>SSB Coverag e Modifica tion List** | | 0.. 1 | | List of SSB beams with modified coverage. | - | |
| **>>>SS B Covera ge Modific ation Item** | | *0.. <maxnoofSSBAr eas>* | | | - | |
| >>>>S SB Index | M | | INTEGER (0..63) | Identifier of the SSB beam to be modified. | - | |
| >>>>S SB Cover age State | M | | INTEGER (0..15, ...) | Value '0' indicates that the SSB beam is inactive. Other values Indicates that the SSB beam is active and also indicates the coverage configurati on of the concerned SSB beam. | - | |
| >>Cover age Modificati on Cause | O | | ENUMERAT ED (coverage, cell edge capacity, ...) | Indicates the reason for the coverage modificatio n in NG-RAN node$_1$. | YES | ignore |
| Local NG-RAN Node Identifier | O | | 9.2.2.101 | | YES | ignore |
| **Neighbour NG- RAN Node List** | | *0.. <maxnoofNeighb ourNG-RAN nodes>* | | | YES | ignore |
| >Global NG- RAN Node ID | M | | 9.2.2.3 | | - | |

EP 4 568 136 A2

| IE/Group Name | Presence | Range | IE type and reference | Semantic s descriptio n | Critic ality | Assig ned Critic ality |
|---|---|---|---|---|---|---|
| >Local NG-RAN Node Identifier | M | | 9.2.2.101 | | - | |
| Local NG-RAN Node Identifier Removal | O | | Local NG-RAN Node Identifier 9.2.2.101 | | YES | ignore |
| Deactivation command | O | | | Indication of deactivatio n of satellite | | |
| Cell list | O | | | Indication of cells to be deactivate d | | |
| DRB ID | O | | | Indication of DRBs to be deactivate d | | |
| SRB ID | O | | | Indication of SRBs to be deactivate d | | |
| Timer | O | | | Deactivati on Timer | | |
| gNB DU ID | O | | | DU to be deactivate d | | |
| Service Area | O | | | Service Area to be deactivate d(e.g., TAI, TAC, (space area, other ID) | | |
| Frequency Band | O | | | Frequency band to be deactivate d | | |
| Area Type | O | | | Service Area type (e.g.,, sea, land, desert) | | |
| Cause | O | | | Cause of Deactivati on of satellite | | |

For IEs according to the Table 16, the Table 7 for the deactivation indication and the 3GPP TS 38.423 standard may be referenced.

According to an embodiment, the first message may be an S-node addition request message, and the second message may be an S-node addition response message. The satellite 620 may transmit the S-node addition request message to the base station 1220 through the XN interface. The base station 1220 may transmit the S-node addition response message to the satellite 620 through the XN interface. The S-node addition request message may include at least one of the information of the Table 7 and the Table 8. The S-node addition response message may include at least one of the information of the Table 7 and the Table 8. For example, the first message may include the following IEs as exemplified in Table 17.

[Table 17]

| IE/Group Name | Presence | Range | IE type and reference | Semantics description | Criticality | Assigned Criticality |
|---|---|---|---|---|---|---|
| | | | | | | |
| Message Type | M | | 9.2.3.1 | | YES | reject |
| M-NG-RAN node UE XnAP ID | M | | NG-RAN node UE XnAP ID 9.2.3.16 | Allocated at the M-NG-RAN node | YES | reject |
| UE Security Capabilities | M | | 9.2.3.49 | | YES | reject |
| S-NG-RAN node Security Kev | M | | 9.2.3.51 | | YES | reject |
| S-NG-RAN node UE Aggregate Maximum Bit Rate | M | | UE Aggregate Maximum Bit Rate 9.2.3.17 | The UE Aggregate Maximum Bit Rate is split into M-NG-RAN node UE Aggregate Maximum Bit Rate and S-NG-RAN node UE Aggregate Maximum Bit Rate which are enforced by M-NG-RAN node and S-NG-RAN node respectively. | YES | reject |
| | | | | | | |
| Selected PLMN | ○ | | PLMN Identity 9.2.2.4 | The selected PLMN of the SCG in the S-NG-RAN node. | YES | ignore |
| Mobility Restriction List | ○ | | 9.2.3.53 | | YES | ignore |
| Index to RAT/Frequen cy Selection Priority | ○ | | 9.2.3.23 | | YES | reject |
| **PDU Session Resources To Be Added List** | | 1 | | | YES | reject |

48

(continued)

| IE/Group Name | Presence | Range | IE type and reference | Semantics description | Criticality | Assigned Criticality |
|---|---|---|---|---|---|---|
| >PDU Session Resources To Be Added Item | | 1 .. <maxnoofPDU-Sessio ns> | | NOTE: If neither the *PDU Session Resource Setup Info - SN terminated* IE nor the *PDU Session Resource Setup Info - MN terminated* IE is present in a *PDU Session Resources To Be Added Item* IE, abnormal conditions as specified in clause 8.3.1.4 applv. | - | |
| >>PDU Session ID | M | | 9.2.3.18 | | - | |
| >>S-NSSAI | M | | 9.2.3.21 | | - | |
| » S-N G-RAN node PDU Session Aggregate Maximum Bit Rate | ○ | | PDU Session Aggregate Maximum Bit Rate 9.2.3.69 | | - | |
| >>PDU Session Resource Setup Info -SN terminated | ○ | | 9.2.1.5 | | - | |
| >>PDU Session Resource Setup Info -MN terminated | ○ | | 9.2.1.7 | | - | |
| M-NG-RAN node to S-NG-RAN node Container | M | | OCTET STRING | Includes the *CG-ConfigInfo* message as defined in subclause 11.2.2 of TS 38.331 [10] | YES | reject |
| | | | | | | |

| IE/Group Name | Presence | Range | IE type and reference | Semantics description | Criticality | Assigned Criticality |
|---|---|---|---|---|---|---|
| S-NG-RAN node UE XnAP ID | ○ | | NG-RAN node UE XnAP ID 9.2.3.16 | Allocated at the S-NG-RAN node | YES | reject |
| Expected UE Behaviour | ○ | | 9.2.3.81 | | YES | ignore |
| Requested Split SRBs | ○ | | ENUMERATED (srb1, srb2, srb1&2, ...) | Indicates that resources for Split SRBs are requested. | YES | reject |
| PCell ID | ○ | | Global NG-RAN Cell Identity 9.2.2.27 | | YES | reject |
| Desired Activity Notification Level | ○ | | 9.2.3.77 | | YES | ignore |
| Available DRB IDs | C-ifSNterminated | | DRB List 9.2.1.29 | Indicates the list of DRB IDs that the S-NG-RAN node may use for SN-terminated bearers. | YES | reject |
| S-NG-RAN node Maximum Integrity Protected Data Rate Uplink | ○ | | Bit Rate 9.2.3.4 | The S-NG-RAN node Maximum Integrity Protected Data Rate Uplink is a portion of the UE's Maximum Integrity Protected Data Rate in the Uplink, which is enforced by the S-NG-RAN node for the UE's SN terminated PDU sessions. If the *S-NG-RAN node Maximum Integrity Protected Data Rate Downlink* IE is not present, this IE applies to both UL and DL. | YES | reject |
| S-NG-RAN node Maximum Integrity Protected Data Rate Downlink | ○ | | Bit Rate 9.2.3.4 | The S-NG-RAN node Maximum Integrity Protected Data Rate Downlink is a portion of the UE's Maximum Integrity Protected Data Rate in the Downlink, which is enforced by the S-NG-RAN node for the UE's SN terminated PDU sessions. | YES | reject |
| | | | | | | |

EP 4 568 136 A2

(continued)

| IE/Group Name | Presence | Range | IE type and reference | Semantics description | Criticality | Assigned Criticality |
|---|---|---|---|---|---|---|
| Location Information at S-NODE reporting | ○ | | ENUMERATED (pscell, ...) | Indicates that the user's Location Information at S-NODE is to be provided. | YES | ignore |
| MR-DC Resource Coordination Information | ○ | | 9.2.2.33 | Information used to coordinate resource utilisation between M-NG-RAN node and S-NG-RAN node. | YES | ignore |
| Masked IMEISV | ○ | | 9.2.3.32 | | YES | ignore |
| NE-DC TDM Pattern | ○ | | 9.2.2.38 | | YES | ignore |
| SN Addition Trigger Indication | ○ | | ENUMERATED (SN change, inter-MN HO, intra-MN HO, ...) | This IE indicates the trigger for S-NG-RAN node Addition Preparation procedure | YES | reject |
| Trace Activation | ○ | | 9.2.3.55 | | YES | ignore |
| Requested Fast MCG recovery via SRB3 | ○ | | ENUMERATED (true, ...) | Indicates that the resources for fast MCG recovery via SRB3 are requested. | YES | ignore |
| UE Radio Capability ID | ○ | | 9.2.3.138 | | YES | reject |
| Source NG-RAN Node ID | ○ | | Global NG-RAN Node ID 9.2.2.3 | The NG-RAN Node ID of the source NG-RAN node or the source SN. | YES | ignore |
| Management Based MDT PLMN List | | | | | YES | ignore |
| UE History Information | ○ | | ○ | | MDT PLMN List 9.2.3.133 | ignore |

EP 4 568 136 A2

(continued)

| IE/Group Name | Presence | Range | IE type and reference | Semantics description | Criticality | Assigned Criticality |
|---|---|---|---|---|---|---|
| | | | | | | |
| UE History Information from the UE | ○ | | 9.2.3.110 | | YES | ignore |
| PSCell Change History | ○ | | ENUMERATED (reporting full history, ...) | | YES | ignore |
| IAB Node Indication | ○ | | ENUMERATED (true, ...) | | YES | reject |
| No PDU Session Indication | ○ | | ENUMERATED (true, ...) | This IE applies only if the UE is an IAB-MT. | YES | ignore |
| **CHO Information SN Addition** | ○ | | | | YES | reject |
| >Source M-NG-RAN node ID | M | | Global NG-RAN Node ID 9.2.2.3 | | - | |
| >Source M-NG-RAN node UE XnAP ID | M | | NG-RAN node UE XnAP ID 9.2.3.16 | Allocated at the source M-NG-RAN node | - | |
| >Estimated Arrival Probability | ○ | | INTEGER (1..100) | | - | |
| SCG Activation Request | ○ | | 9.2.3.154 | | YES | ignore |
| **Conditional PSCell Addition Information Request** | ○ | | | | YES | reject |

| IE/Group Name | Presence | Range | IE type and reference | Semantics description | Criticality | Assigned Criticality |
|---|---|---|---|---|---|---|
| >Maximum Number of PSCells To Prepare | M | | INTEGER (1..8, ...) | Indicates the maximum number of PSCells that the target SN may prepare. | - | |
| >Estimated Arrival Probability | ○ | | INTEGER (1..100) | Indicates the arrival probability for the UE towards the candidate target SN. | - | |
| S-NG-RAN node UE Slice Maximum Bit Rate | ○ | | UE Slice Maximum Bit Rate List 9.2.3.167 | This IE indicates the S-NG-RAN node portion of the UE Slice Aggregate Maximum Bit Rate as specified in TS 23.501 [7] | YES | reject |
| F1-terminating IAB-donor Indicator | ○ | | ENUMERATED (true, ...) | This IE applies only if the UE is an IAB-MT. | YES | reject |
| Deactivation command | ○ | | | Indication of deactivation of satellite | | |
| Cell list | ○ | | | Indication of cells to be deactivated | | |
| | | | | | | |
| DRB ID | ○ | | | Indication of DRBs to be deactivated | | |
| SRB ID | ○ | | | Indication of SRBs to be deactivated | | |
| Timer | ○ | | | Deactivation Timer | | |
| gNB DU ID | ○ | | | DU to be deactivated | | |
| Service Area | ○ | | | Service Area to be deactivated(e. g., TAI, TAC, (space area, other ID) | | |
| Frequency Band | ○ | | | Frequency band to be deactivated | | |
| Area Type | ○ | | | Service Area type (e.g.,, sea, land, desert) | | |
| Cause | ○ | | | Cause of Deactivation of satellite | | |

For IEs according to the Table 17, the Table 7 for the deactivation indication and the 3GPP TS 38.423 standard may be referenced.

According to an embodiment, the first message may be an S-node modification request message, and the second message may be an S-node modification response message. The satellite 620 may transmit the S-node modification request message to the base station 1220 through the XN interface. The base station 1220 may transmit the S-node modification response message to the satellite 620 through the XN interface. The S-node modification request message may include at least one of the information of the Table 7 and the Table 8. The S-node modification response message may include at least one of the information in the Table 7 and the Table 8. For example, the first message may include the following IEs as exemplified in Table 18.

[Table 18]

| IE/Group Name | Presence | Range | IE type and reference | Semantics description | Criticality | Assigned Criticality |
|---|---|---|---|---|---|---|
| Message Type | M | | 9.2.3.1 | | YES | reject |
| M-NG-RAN node UE XnAP ID | M | | NG-RAN node UE XnAP ID 9.2.3.16 | Allocated at the M-NG-RAN node | YES | reject |
| S-NG-RAN node UE XnAP ID | M | | NG-RAN node UE XnAP ID 9.2.3.16 | Allocated at the S-NG-RAN node | YES | reject |
| Cause | M | | 9.2.3.2 | | YES | ignore |
| PDCP Change Indication | ○ | | 9.2.3.74 | | YES | ignore |
| Selected PLMN | ○ | | PLMN Identity 9.2.2.4 | The selected PLMN of the SCG in the S-NG-RAN node. | YES | ignore |
| Mobility Restriction List | ○ | | 9.2.3.53 | | YES | ignore |
| SCG Configuration Query | ○ | | 9.2.3.27 | | YES | ignore |
| **UE Context Information** | | *0..1* | | | YES | reject |
| >UE Security Capabilities | ○ | | 9.2.3.49 | | - | |
| >S-NG-RAN node Security Kev | ○ | | 9.2.3.51 | | - | |
| >S-NG-RAN node UE Aggregate Maximum Bit Rate | ○ | | UE Aggre-gate Maxi-mum Bit Rate 9.2.3.17 | | - | |

| IE/Group Name | Presence | Range | IE type and reference | Semantics description | Criticality | Assigned Criticality |
|---|---|---|---|---|---|---|
| >Index to RAT/-Frequency Selection Priority | ○ | | 9.2.3.23 | | - | |
| >Lower Layer presence status change | ○ | | 9.2.3.60 | | - | |
| **>PDU Session Resources To Be Added List** | | *0..1* | | | - | |
| **>>PDU Session Resources To Be Added Item** | | *1 .. <maxnoofPDUSessions >* | | NOTE: If neither the *PDU Session Resource Setup Info - SN terminated* IE nor the *PDU Session Resource Setup Info - MN terminated* IE is present in a *PDU Session Resources To Be Added Item* IE, abnormal conditions as specified in clause 8.3.3.4 apply. | - | |
| >>>PDU Session ID | M | | 9.2.3.18 | | - | |
| >>>S-NSSAI | M | | 9.2.3.21 | | - | |
| >>>S-NG-RAN node PDU Session Aggregate Maximum Bit Rate | ○ | | PDU Session Aggregate Maximum Bit Rate 9.2.3.69 | | - | |
| >>>PDU Session Resource Setup Info - SN terminated | ○ | | 9.2.1.5 | | - | |

(continued)

| IE/Group Name | Presence | Range | IE type and reference | Semantics description | Criticality | Assigned Criticality |
|---|---|---|---|---|---|---|
| >>>PDU Session Resource Setup Info - MN terminated | ○ | | 9.2.1.7 | | - | |
| >>>PDU Session Expected UE Activity Behaviour | ○ | | Expected UE Activity Behaviour 9.2.3.82 | Expected UE Activity Behaviour for the PDU Session. | YES | ignore |
| >PDU Session Resources To Be Modified List | | 0..1 | | | - | |
| >>PDU Session Resources To Be Modified Item | | 1 .. <maxnoofPDUSessions > | | NOTE: If neither the *PDU Session Resource Modification Info - SN terminated* IE nor the *PDU Session Resource Modification Info - MN terminated* IE is present in a *PDU Session Resources To Be Modified Item* IE, abnormal conditions as specified in clause 8.3.3.4 apply. | - | |
| >>>PDU Session ID | M | | 9.2.3.18 | | - | |
| >>>S-NG-RAN node PDU Session Aggregate Maximum Bit Rate | ○ | | PDU Session Aggregate Maximum Bit Rate 9.2.3.69 | | - | |
| >>>PDU Session Resource Modification Info - SN terminated | ○ | | 9.2.1.9 | | - | |

EP 4 568 136 A2

57

(continued)

| IE/Group Name | Presence | Range | IE type and reference | Semantics description | Criticality | Assigned Criticality |
|---|---|---|---|---|---|---|
| >>>PDU Session Resource Modification Info - MN terminated | ○ | | 9.2.1.11 | | - | |
| >>>S-NSSAI | ○ | | 9.2.3.21 | | YES | reject |
| >>>PDU Session Expected UE Activity Behaviour | ○ | | Expected UE Activity Behaviour 9.2.3.82 | Expected UE Activity Behaviour for the PDU Session. | YES | ignore |
| >PDU Session Resources To Be Released List | ○ | | PDU session List with Cause 9.2.1.26 | | - | |
| M-NG-RAN node to S-NG-RAN node Container | ○ | | OCTET STRING | Includes the *CG-ConfigInfo* message as defined in subclause 11.2.2. of TS 38.331 [10]. | YES | ignore |
| Requested Split SRBs | ○ | | ENUMERATED (srb1, srb2, srb1&2, ...) | Indicates that resources for Split SRBs are requested. | YES | ignore |
| Requested Split SRBs release | ○ | | ENUMERATED (srb1, srb2, srb1&2, ...) | Indicates that resources for Split SRBs are requested to be released. | YES | ignore |
| Desired Activity Notification Level | ○ | | 9.2.3.77 | | YES | ignore |
| Additional DRB IDs | ○ | | DRB List 9.2.1.29 | Indicates additional list of DRB IDs that the S-NG-RAN node may use for SN-terminated bearers. | YES | reject |

(continued)

| IE/Group Name | Presence | Range | IE type and reference | Semantics description | Criticality | Assigned Criticality |
|---|---|---|---|---|---|---|
| S-NG-RAN node Maximum Integrity Protected Data Rate Uplink | ○ | | Bit Rate 9.2.3.4 | The S-NG-RAN node Maximum Integrity Protected Data Rate Uplink is a portion of the UE's Maximum Integrity Protected Data Rate in the Uplink, which is enforced by the S-NG-RAN node for the UE's SN terminated PDU sessions. If the S-NG-RAN node Maximum Integrity Protected Data Rate Downlink IE is not present, this IE applies to both UL and DL. | YES | reject |
| S-NG-RAN node Maximum Integrity Protected Data Rate Downlink | ○ | | Bit Rate 9.2.3.4 | The S-NG-RAN node Maximum Integrity Protected Data Rate Downlink is a portion of the UE's Maximum Integrity Protected Data Rate in the Downlink, which is enforced by the S-NG-RAN node for the UE's SN terminated PDU sessions. | YES | reject |
| Location Information at S-NODE reporting | ○ | | ENUMERATED (pscell,...) | Indicates that the user's Location Information at S-NODE is to be provided. | YES | ignore |
| MR-DC Resource Coordination Information | ○ | | 9.2.2.33 | Information used to coordinate resource utilisation between M-NG-RAN node and S-NG-RAN node. | YES | ignore |
| PCell ID | ○ | | Global NG-RAN Cell Identity 9.2.2.27 | | YES | reject |
| NE-DC TDM Pattern | ○ | | 9.2.2.38 | | YES | ignore |
| Requested Fast MCG recovery via SRB3 | ○ | | ENUMERATED (true, ...) | Indicates that the resources for fast MCG recovery via SRB3 are requested. | YES | ignore |
| Requested Fast MCG recovery via SRB3 Release | ○ | | ENUMERATED (true, ...) | Indicates that resources for fast MCG recovery via SRB3 are requested to be released. | YES | ignore |
| SN triggered | ○ | | ENUMERATED (TRUE ...) | | YES | ignore |
| Target Node ID | ○ | | Global NG-RAN Node ID 9.2.2.3 | Indicates the target node ID of the handover procedure decided by the M-NG-RAN node. | YES | ignore |

(continued)

| IE/Group Name | Presence | Range | IE type and reference | Semantics description | Criticality | Assigned Criticality |
|---|---|---|---|---|---|---|
| PSCell History Information Retrieve | ○ | | ENUMERATED (query, ...) | Indicates that the SN UE history information is requested. | YES | ignore |
| UE History Information from the UE | ○ | | 9.2.3.110 | | YES | ignore |
| **CHO Information SN Modification** | ○ | | | | YES | ignore |
| >Conditional Re-configuration | M | | ENUMERATED (intra-MN-CHO, ...) | | - | |
| >Estimated Arrival Probability | ○ | | INTEGER (1..100) | | - | |
| SCG Activation Request | ○ | | 9.2.3.154 | | YES | ignore |
| **Conditional PSCell Addition Information Modification Request** | ○ | | | This IE may be sent to the target SN. | YES | ignore |
| >Maximum Number of PSCells To Prepare | ○ | | INTEGER (1..8, ...) | Indicates the maximum number of PSCells that the target SN may prepare. | - | |
| >Estimated Arrival Probability | ○ | | INTEGER (1..100) | Indicates the arrival probability for the UE towards the candidate target SN. | - | |
| **Conditional PSCell Change Information Update** | ○ | | | This IE may be sent to the source SN. | YES | ignore |
| **>Multiple Target S-NG-RAN Node List** | | 1 | | | - | |

| IE/Group Name | Presence | Range | IE type and reference | Semantics description | Criticality | Assigned Criticality |
|---|---|---|---|---|---|---|
| >>Multiple Target S-NG-RAN Node Item | | 1 .. <maxnoofTargetSNs> | | | - | |
| >>>Target S-NG-RAN node ID | M | | Global NG-RAN Node ID 9.2.2.3 | | - | |
| >>>Candidat e PSCell List | | 1 | | | - | |
| >>Candid ate PSCell Item | | 1 .. <maxnoofPSCell-Candid ate> | | | - | |
| >>>>>PSC ell ID | M | | NR CGI 9.2.2.7 | | - | |
| S-NG-RAN node UE Slice Maximum Bit Rate | ○ | | UE Slice Maximum Bit Rate List 9.2.3.167 | This IE indicates the S-NG-RAN node portion of the UE Slice Aggregate Maximum Bit Rate as specified in TS 23.501 [7] | YES | ignore |
| Management Based MDT PLMN Modification List | ○ | | MDT PLMN Modification List 9.2.3.169 | | YES | ignore |
| Deactivation command | ○ | | | Indication of deactivation of satellite | | |
| Cell list | ○ | | | Indication of cells to be deactivated | | |
| DRB ID | ○ | | | Indication of DRBs to be deactivated | | |
| SRB ID | ○ | | | Indication of SRBs to be deactivated | | |
| Timer | ○ | | | Deactivation Timer | | |
| gNB DU ID | ○ | | | DU to be deactivated | | |

(continued)

| IE/Group Name | Presence | Range | IE type and reference | Semantics description | Criticality | Assigned Criticality |
|---|---|---|---|---|---|---|
| Service Area | ○ | | | Service Area to be deactivated(e. g., TAI, TAC, (space area, other ID) | | |
| Frequency Band | ○ | | | Frequency band to be deactivated | | |
| Area Type | ○ | | | Service Area type (e.g.,, sea, land, desert) | | |
| Cause | ○ | | | Cause of Deactivation of satellite | | |

For IEs according to the Table 18, the Table 7 for the deactivation indication and the 3GPP TS 38.423 standard may be referenced.

According to an embodiment, the first message may be an S-node modification demand message, and the second message may be an S-node modification confirmation message. The satellite 620 may transmit the S-node modification demand message to the base station 1220 through the XN interface. The base station 1220 may transmit an S-node modification confirmation message to the satellite 620 through the XN interface. The S-node modification demand message may include at least one of the information of the Table 7 and the Table 8. The S-node modification confirmation message may include at least one of the information of the Table 7 and the Table 8. For example, the first message may include the following IEs as exemplified in Table 19.

[Table 19]

| IE/Group Name | Presence | Range | IE type and reference | Semantics description | Criticality | Assigned Criticality |
|---|---|---|---|---|---|---|
| Message Type | M | | 9.2.3.1 | | YES | reject |
| M-NG-RAN node UE XnAP ID | M | | NG-RAN node UE XnAP ID 9.2.3.16 | Allocated at the M-NG-RAN node | YES | reject |
| S-NG-RAN node UE XnAP ID | M | | NG-RAN node UE XnAP ID 9.2.3.16 | Allocated at the S-NG-RAN node | YES | reject |
| Cause | M | | 9.2.3.2 | | YES | ignore |
| PDCP Change Indication | ○ | | 9.2.3.74 | | YES | ignore |
| **PDU Session Resources To Be Modified List** | | *0..1* | | | YES | ignore |
| **>PDU Session Resources To Be Modified Item** | | *1.. <maxnoofPDUSessions>* | | NOTE: If neither the *PDU Session Resource Modification Required Info - SN terminated* IE nor the *PDU Session Resource Modification Required Info - MN terminated* IE is present in *a PDU Session Resources To Be Modified Item* IE, abnormal conditions as specified in clause 8.3.4.4 applv. | | |
| >>PDU Session ID | M | | 9.2.3.18 | | - | |
| >>PDU Session Resource Modification Required Info - SN terminate d | ○ | | 9.2.1.20 | | - | |
| >>PDU Session Resource Modification Required Info - MN terminate d | ○ | | 9.2.1.22 | | - | |
| **PDU Session Resources To Be Released List** | | *0..1* | | | YES | ignore |

(continued)

| IE/Group Name | Presence | Range | IE type and reference | Semantics description | Criticality | Assigned Criticality |
|---|---|---|---|---|---|---|
| **>PDU Session Resources To Be Released Item** | | 1.. *<maxnoofPDUSession s>* | | | - | |
| >PDU sessions to be released List - SN terminate d | ○ | | PDU session List with data forwarding request info 9.2.1.24 | | - | |
| >PDU sessions to be released List - MN terminate d | ○ | | PDU session List with Cause 9.2.1.26 | | - | |
| S-NG-RAN node to M-NG-RAN node Container | ○ | | OCTET STRING | Includes the *CG-Config* message or the *CG-CandidateLis t* message as defined in subclause 11.2.2 of TS 38.331 [10]. | YES | ignore |
| Spare DRB IDs | ○ | | DRB List 9.2.1.29 | Indicates the list of unnecessary DRB IDs that had been used by the S-NG-RAN node. | YES | ignore |
| Required Number of DRB IDs | ○ | | Number of DRBs 9.2.3.78 | Indicates the number of DRB IDs that the S-NG-RAN node requests more. | YES | ignore |
| Location Information at S-NODE | ○ | | Target Cell Global ID 9.2.3.25 | Contains information to support localisation of the UE | YES | ignore |
| MR-DC Resource Coordination Information | ○ | | 9.2.2.33 | Information used to coordinate resource utilisation between M-NG-RAN node and S-NG-RAN node. | YES | ignore |
| RRC Config Indication | ○ | | 9.2.3.72 | | YES | reject |
| SCG Indicator | ○ | | ENUMERATED(released,...) | | YES | ignore |
| SCG UE History Information | ○ | | 9.2.3.151 | | Yes | ignore |
| SCG Activation Request | ○ | | 9.2.3.154 | | YES | ignore |
| **CPAC Information Required** | ○ | | | This IE may be sent from the target SN. | YES | ignore |

| IE/Group Name | Presence | Range | IE type and reference | Semantics description | Criticality | Assigned Criticality |
|---|---|---|---|---|---|---|
| >Candidat e PSCell List | | 1 | | Indicates the full list of candidate PSCells prepared at the target S-NG-RAN node. | - | |
| >>Candid ate PSCell Item | | 1.. <maxnoofPSCell-Candi date> | | | - | |
| >>>PSC ell ID | M | | NR CGI 9.2.2.7 | | - | |
| SCG Reconfigurati on No-tification | ○ | | ENUMERATED (exe-cuted, ..., executed-de-leted, deleted) | | YES | ignore |
| Deactivation command | ○ | | | Indication of deactivation of satellite | | |
| Cell list | ○ | | | Indication of cells to be deactivated | | |
| DRB ID | ○ | | | Indication of DRBs to be deactivated | | |
| SRB ID | ○ | | | Indication of SRBs to be deactivated | | |
| Timer | ○ | | | Deactivation Timer | | |
| gNB DU ID | ○ | | | DU to be deactivated | | |
| Service Area | ○ | | | Service Area to be deactivated(e .g., TAI, TAC, (space area, other ID) | | |
| Frequency Band | ○ | | | Frequency band to be deactivated | | |
| Area Type | ○ | | | Service Area type (e.g.,, sea, land, desert) | | |
| Cause | ○ | | | Cause of Deactivation of satellite | | |

EP 4 568 136 A2

For IEs according to the Table 19, the Table 7 for the deactivation indication and the 3GPP TS 38.423 standard may be referenced.

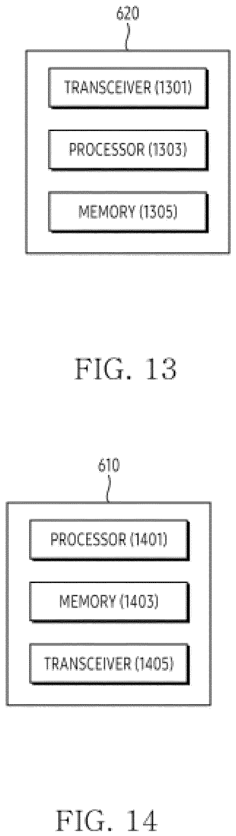

FIG. 13 illustrates an example of components of a satellite (e.g., the satellite 260 or the satellite 620). The terms '... unit', '... device', and the like, used hereinafter mean a unit that processes at least one function or operation, which may be implemented as hardware or software or a combination of hardware and software.

Referring to FIG. 13, the satellite 620 may include a transceiver 1301, a processor 1303, and memory 1305. The transceiver 1301 performs functions for transmitting and receiving a signal through a wireless channel. For example, the transceiver 1301 up-converts a baseband signal into an RF band signal and then transmits it through an antenna, and down-converts the RF band signal received through the antenna into the baseband signal. For example, the transceiver 1301 may include a transmission filter, a reception filter, an amplifier, a mixer, an oscillator, a DAC, an ADC, and the like.

The transceiver 1301 may include a plurality of transmission/reception paths. Furthermore, the transceiver 1301 may include an antenna unit. The transceiver 1301 may include at least one antenna array configured with a plurality of antenna elements. In terms of hardware, the transceiver 1301 may be configured with a digital circuit and an analog circuit (e.g., a radio frequency integrated circuit (RFIC)). Herein, the digital circuit and the analog circuit may be implemented as one package. In addition, the transceiver 1301 may include a plurality of RF chains. The transceiver 1301 may perform beamforming. The transceiver 1301 may apply a beamforming weight to a signal in order to assign directivity to the signal to be transmitted and received according to a setting of the processor 1303. According to an embodiment, the transceiver 1301 may include a radio frequency (RF) block (or a RF unit).

The transceiver 1301 may transmit and receive a signal on a radio access network. For example, the transceiver 1301 may transmit a downlink signal. The downlink signal may include a synchronization signal (SS), a reference signal (RS) (e.g., a cell-specific reference signal (CRS) and a demodulation (DM)-RS), system information (e.g., a MIB, a SIB, and remaining system information (RMSI), other system information (OSI)), a configuration message, control information, or downlink data. In addition, for example, the transceiver 1301 may receive an uplink signal. The uplink signal may include a random access related signal (e.g., a random access preamble (RAP) (or a message 1 (Msg 1)), or a message 3 (Msg 3)), a reference signal (e.g., a sounding reference signal (SRS), or a DM-RS), or a power headroom report (PHR). Only the transceiver 1301 is illustrated in FIG. 13, but according to another implementation example, the satellite 620 may include two or more RF transceivers.

The processor 1303 controls overall operations of the satellite 620. The processor 1303 may be referred to as a control unit. For example, the processor 1303 transmits and receives a signal through the transceiver 1301. Furthermore, the processor 1303 writes and reads data to the memory 1305. Additionally, the processor 1303 may perform functions of a protocol stack required by a communication standard. Only the processor 1303 is illustrated in FIG. 13, but according to another implementation example, the satellite 620 may include two or more processors. The processor 1303, which is an instruction set or a code stored in the memory 1305, may be a storage space that stores an instructions/code or an instructions/code that are temporarily resided in the processor 1303, or may be part of circuitry constituting the processor 1303. In addition, the processor 1303 may include various modules for performing communication. The processor 1303 may control the satellite 620 to perform operations according to embodiments.

The memory 1305 stores data such as a basic program, an application program, setting information, and the like, for an operation of the satellite 620. The memory 1305 may be referred to as a storage unit. The memory 1305 may be configured with volatile memory, non-volatile memory, or a combination of the volatile memory and the non-volatile memory. Additionally, the memory 1305 provides stored data according to a request of the processor 1303. According to an embodiment, the memory 1305 may include memory for a condition, a command, or a setting value related to an SRS transmission method.

FIG. 14 illustrates an example of components of a terminal (e.g., UE 610). The terminal exemplifies the UE 610. The UE 610 may perform access to a gNB (e.g., the gNB 120) that provides NR access through an NTN.

Referring to FIG. 14, the UE 610 may include at least one processor 1401, at least one memory 1403, and at least one transceiver 1405. Hereinafter, a component is described in the singular, but implementation of a plurality of components or sub-components is not excluded.

The processor 1401 controls overall operations of the UE 610. For example, the processor 1401 writes and reads data to the memory 1403. For example, the processor 1401 transmits and receives a signal through the transceiver 1405. One processor is illustrated in FIG. 14, but embodiments of the present disclosure are not limited thereto. The UE 610 may include at least one processor to perform embodiments of the present disclosure. The processor 1401 may be referred to as a control unit or a control means. According to embodiments, the processor 1401 may control the UE 610 to perform at least one of operations or methods according to embodiments of the present disclosure.

The memory 1403 may store data such as a basic program, an application program, and setting information for an operation of the UE 610. The memory 1403 may store various data used by at least one component (e.g., the transceiver 1405 or the processor 1401). The data may include, for example, input data or output data for software and commands related thereto. The memory 1403 may be configured with volatile memory, nonvolatile memory, or a combination of the volatile memory and the nonvolatile memory. Additionally, the memory 1403 may provide stored data according to a request of the processor 1401.

The transceiver 1405 performs functions for transmitting and receiving a signal through a wireless channel. For example, the transceiver 1405 performs a conversion function between a baseband signal and a bit stream according to a physical layer specification of a system. For example, when transmitting data, the transceiver 1405 generates complex symbols by encoding and modulating a transmission bit stream. In addition, when receiving data, the transceiver 1405 restores a reception bit stream by demodulating and decoding the baseband signal. In addition, the transceiver 1405 up-converts the baseband signal into a radio frequency (RF) band signal and then transmits it through an antenna, and down-converts the RF band signal received through the antenna into the baseband signal.

To this end, the transceiver 1405 may include a transmission filter, a reception filter, an amplifier, a mixer, an oscillator, a digital to analog converter (DAC), an analog to digital converter (ADC), and the like. In addition, the transceiver 1405 may include a plurality of transmission/ reception paths. Furthermore, the transceiver 1405 may include at least one antenna array configured with a plurality of antenna elements. In terms of hardware, the transceiver 1405 may be configured with a digital unit and an analog unit, and the analog unit may be configured with a plurality of sub-units according to operating power, operating frequency, and the like.

The transceiver 1405 transmits and receives a signal as described above. Accordingly, the transceiver 1405 may be referred to as a 'transmission unit', a 'reception unit', or a 'transmission/reception unit'. In addition, in the following description, transmission and reception performed through a wireless channel, a backhaul network, an optical cable, Ethernet, or another wired path are used in a meaning of including processing as described above being performed by the transceiver 1405. According to an embodiment, the transceiver 1405 may provide an interface for performing communication with other nodes in a network. That is, the transceiver 1405 may convert a bit stream transmitted from the UE 610 to another node, for example, another access node, another base station, an upper node, a core network, and the like into a physical signal, and may convert a physical signal received from another node into a bit stream.

In describing embodiments of the present disclosure, terms and messages defined in 3GPP are used to describe a message between a satellite (e.g., the satellite 620) and a terminal (e.g., the UE 610), but embodiments of the present disclosure are not limited thereto. Terms and messages having a technical meaning equivalent to the above-described terms and messages may be replaced and used of course. Furthermore, a gNB, a gNB-CU, and a gNB-DU, as well as a gNB-CU-control plane (CP) (e.g., the C-plane in FIG. 3A) and a gNB-CU-user plane (UP) (e.g., the U-plane in FIG. 3B) may be used as a satellite. In addition, not only a satellite may be used as a base station (e.g., a gNB) or a part of a base station (e.g., a DU), but also a core network entity (e.g., an AMF 235) connected to a base station may be implemented as the satellite. For example, communication between the satellite 620 and the satellite operating as the AMF 235 may be defined. For example, logical nodes including the AMF 235 and the gNB 120 may be implemented in one satellite. As implemented in a software manner through network virtualization, separated logical nodes may be disposed in a satellite, which is one piece of hardware.

In embodiments, an apparatus of a satellite for providing a non-terrestrial network (NTN) access is provided. The apparatus may comprise memory storing instructions, at least one processor, and at least one transceiver. The instructions, when executed by the at least one processor, may cause the apparatus to transmit, to a terminal through the at least one transceiver, a message including information indicating whether transform precoding of downlink transmission is activated, generate downlink signals based on the information, and transmit, to the terminal through the at least one transceiver, the downlink signals. In a case that the information indicates that the transform precoding is activated, the downlink signals may be generated through discrete a fourier transform-spreading (DFT-S) orthogonal frequency division multiplexing (OFDM) scheme, and in a case that the information does not indicate that the transform precoding is activated, the downlink signals may be generated through a cyclic prefix (CP)-OFDM scheme.

For example, the instructions, when executed by the at least one processor, may cause the apparatus to receive, from the terminal, capability information indicating that the terminal supports the transform precoding of downlink transmission.

For example, the message may include physical downlink shared channel (PDSCH) configuration information related to a non-terrestrial network (NTN). The PDSCH configuration information may include information indicating whether the transform precoding for a PDSCH is activated, first modulation and coding scheme (MCS) table information, and second MCS table information. The first MCS table information may indicate a MCS table used in case that the transform precoding is activated. The second MCS table information may indicate an MCS table used in case that the transform precoding is not activated.

In embodiments, a terminal for communicating with a satellite in a non-terrestrial network (NTN) access is provided. The terminal may comprise memory storing instructions, at least one processor, and at least one transceiver. The instructions, when executed by the at least one processor, may cause the terminal to receive, from the satellite through the at least one transceiver, a message including information indicating whether transform precoding of downlink transmission is activated and receive, from the satellite through the at least one transceiver, downlink signals based on the information. In a case that the information indicates that the transform precoding is activated, the downlink signals may be received through a discrete fourier transform-spreading (DFT-S) orthogonal frequency division multiplexing (OFDM) scheme. In a case that the information does not indicate that the transform precoding is activated, the downlink signals may be received through a cyclic prefix (CP)-OFDM scheme.

For example, the instructions, when executed by the at least one processor, may cause the terminal to transmit, to the satellite, capability information indicating that the terminal supports the transform precoding of downlink transmission.

For example, the message may include physical downlink shared channel (PDSCH) configuration information related to a non-terrestrial network (NTN). The PDSCH configuration information may include information indicating whether the transform precoding for a PDSCH is activated, first modulation and coding scheme (MCS) table information, and second MCS table information. The first MCS table information may indicate a MCS table used in case that the transform precoding is activated. The second MCS table information may indicate an MCS table used in case that the transform precoding is not activated.

In embodiments, a network apparatus for performing a communication with a satellite for providing a non-terrestrial network (NTN) access is provided. The network apparatus may comprise memory storing instructions, at least one processor, and at least one transceiver. The instructions, when executed by the at least one processor, may cause the network apparatus to identify a plurality of satellites corresponding to a sector related to a specific area, identify a first satellite to be deactivated among the plurality of satellites, based on prediction information related to a specific time, and transmit, to the first satellite through the at least one transceiver, a message for indicating deactivation of the first satellite.

For example, the message may include at least one of information on a cell to be deactivated, information on a data radio bearer (DRB) to be deactivated, information on a signaling radio bearer (SRB) to be deactivated, information on a distributed unit (DU) to be deactivated, or information on a frequency band to be deactivated.

For example, the message may include information on a service area to be deactivated and information on a type of the service area. The service area to be deactivated may include at least one of an area specified by a tracking area identity (TAI), an area specified by a TAI list, an area specified by a tracking area code (TAC), or a space area indicating one of space of a celestial body. The type may indicate one of a plurality of types of the service area. The plurality of types may include at least one of a sea, a continent, an island, or a desert.

For example, the message may include information on a timer for deactivation. The timer may start from a time when the message is received, and in a case that the timer expires, a state of the satellite may change from an inactive state to an active state.

For example, the message may include information on a cause of deactivation. The cause may indicate one of a plurality of causes. The plurality of causes may include at least one of deactivation due to orbital movement, resource optimization, user inactivity, service area type, low traffic in the cell, or low traffic in the service area. For example, the network apparatus may be a network entity that operates as an access and mobility management function (AMF) or a central unit (CU).

For example, the instructions, when executed by the at least one processor, may cause the network apparatus to transmit, to the first satellite through the at least one transceiver, another control signal indicating an activation of the first satellite.

In embodiments, an apparatus of a satellite for providing a non-terrestrial network (NTN) access is provided. The apparatus may comprise memory storing instructions, at least one processor, and at least one transceiver. The instructions, when executed by the at least one processor, may cause the satellite to receive, from a network apparatus through the at least one transceiver, a message for indicating deactivation of the satellite, and in response to the message, deactivate at least one of components of the satellite. The deactivation of the satellite may be associated with a specific area and a specific time.

For example, the message may include at least one of information on a cell to be deactivated, information on a data radio bearer (DRB) to be deactivated, information on a signaling radio bearer (SRB) to be deactivated, information on a distributed unit (DU) to be deactivated, or information on a frequency band to be deactivated.

For example, the message may include information on a service area to be deactivated and information on a type of the service area. The service area to be deactivated may include at least one of an area specified by a tracking area identity (TAI), an area specified by a TAI list, an area specified by a tracking area code (TAC), or a space area indicating one of space of a celestial body. The type may indicate one of a plurality of types of the service area. The plurality of types may include at least one of a sea, a continent, an island, or a desert.

For example, the message may include information on a timer for deactivation. The timer may start from a time when the message is received, and in a case that the timer expires, a state of the satellite may change from an inactive state to an active state.

For example, the message may include information on a cause of deactivation. The cause may indicate one of a plurality of causes. The plurality of causes may include at least one of deactivation due to orbital movement, resource optimization, user inactivity, service area type, low traffic in the cell, or low traffic in the service area. For example, the network apparatus may be a network entity that operates as an access and mobility management function (AMF) or a central unit (CU).

For example, the instructions, when executed by the at least one processor, may cause the satellite to receive, from the network apparatus through the at least one transceiver, another control signal indicating activation of the first satellite, and activate at least one of the components of the satellite in response to the another control signal.

Methods according to embodiments described in claims or specifications of the present disclosure may be implemented as a form of hardware, software, or a combination of hardware and software.

In case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in random access memory, a non-volatile memory including flash memory, read only memory (ROM), an electrically erasable programmable read only memory (EEPROM), a magnetic disc storage device, compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device capable of being accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural components, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

**Claims**

1. An apparatus of a satellite for providing a non-terrestrial network (NTN) access, comprising:

   memory storing instructions;
   at least one processor; and
   at least one transceiver, and
   wherein the instructions, when executed by the at least one processor, cause the apparatus to:

   transmit, to a terminal through the at least one transceiver, a message including information indicating whether transform precoding of downlink transmission is activated;
   generate downlink signals based on the information; and
   transmit, to the terminal through the at least one transceiver, the downlink signals, and
   wherein, in a case that the information indicates that the transform precoding is activated, the downlink signals are generated through a discrete fourier transform-spreading (DFT-S) orthogonal frequency division multiplexing (OFDM) scheme, and
   wherein, in a case that the information does not indicate that the transform precoding is activated, the downlink signals are generated through a cyclic prefix (CP)-OFDM scheme.

2. The apparatus of claim 1, wherein the instructions, when executed by the at least one processor, cause the apparatus to:
   receive, from the terminal, capability information indicating that the terminal supports the transform precoding of downlink transmission.

3. The apparatus of claim 1,

   wherein the message includes physical downlink shared channel (PDSCH) configuration information related to a non-terrestrial network (NTN),
   wherein the PDSCH configuration information includes information indicating whether the transform precoding for a PDSCH is activated, first modulation and coding scheme (MCS) table information, and second MCS table information,
wherein the first MCS table information indicates a MCS table used in case that the transform precoding is activated, and
wherein the second MCS table information indicates a MCS table used in case that the transform precoding is not activated.

4. A terminal for communicating with a satellite in a non-terrestrial network (NTN) access, comprising:

memory storing instructions;
at least one processor; and
at least one transceiver, and
wherein the instructions, when executed by the at least one processor, cause the terminal to:

receive, from the satellite through the at least one transceiver, a message including information indicating whether transform precoding of downlink transmission is activated; and
receive, from the satellite through the at least one transceiver, downlink signals based on the information, and
wherein, in a case that the information indicates that the transform precoding is activated, the downlink signals are received through a discrete fourier transform-spreading (DFT-S) orthogonal frequency division multiplexing (OFDM) scheme, and
wherein, in a case that the information does not indicate that the transform precoding is activated, the downlink signals are received through a cyclic prefix (CP)-OFDM scheme.

5. The terminal of claim 4, wherein the instructions, when executed by the at least one processor, cause the terminal to: transmit, to the satellite, capability information indicating that the terminal supports the transform precoding of downlink transmission.

6. The terminal of claim 4,

wherein the message includes physical downlink shared channel (PDSCH) configuration information related to a non-terrestrial network (NTN),
wherein the PDSCH configuration information includes information indicating whether the transform precoding for a PDSCH is activated, first modulation and coding scheme (MCS) table information, and second MCS table information,
wherein the first MCS table information indicates a MCS table used in case that the transform precoding is activated, and
wherein the second MCS table information indicates a MCS table used in case that the transform precoding is not activated.

7. A network apparatus for performing a communication with a satellite for providing a non-terrestrial network (NTN) access, comprising:

memory storing instructions;
at least one processor; and
at least one transceiver, and
wherein the instructions, when executed by the at least one processor, cause the network apparatus to:

identify a plurality of satellites corresponding to a specific geographic area;
identify a first satellite to be deactivated among the plurality of satellites, based on prediction information related to a specific time; and
transmit, to the first satellite through the at least one transceiver, a message for indicating deactivation of the first satellite.

8. The network apparatus of claim 7,
wherein the message includes at least one of information on a cell to be deactivated, information on a data radio bearer (DRB) to be deactivated, information on a signaling radio bearer (SRB) to be deactivated, information on a distributed unit (DU) to be deactivated, or information on a frequency band to be deactivated.

9. The network apparatus of claim 7,

wherein the message includes information on a service area to be deactivated and information on a type of the service area,

wherein the service area to be deactivated includes at least one of an area specified by a tracking area identity (TAI), an area specified by a TAI list, an area specified by a tracking area code (TAC), or a space area indicating one of space of a celestial body,

wherein the type indicates one of a plurality of types of the service area, and

wherein the plurality of types include at least one of a sea, a continent, an island, or a desert.

10. The network apparatus of claim 7,

wherein the message includes information on a timer for deactivation,

wherein the timer starts from a time when the message is received, and

wherein, in a case that the timer expires, a state of the satellite changes from an inactive state to an active state.

11. The network apparatus of claim 7,

wherein the message includes information on a cause of deactivation,

wherein the cause indicates one of a plurality of causes, and

wherein the plurality of causes includes at least one of deactivation due to orbital movement, resource optimization, user inactivity, service area type, low traffic in the cell, or low traffic in the service area.

12. The network apparatus of claim 7,
wherein the network apparatus is a network entity that operates as an access and mobility management function (AMF) or a central unit (CU).

13. The network apparatus of claim 7, wherein the instructions, when executed by the at least one processor, cause the network apparatus to:
transmit, to the first satellite through the at least one transceiver, another control signal indicating an activation of the first satellite.

14. An apparatus of a satellite for providing a non-terrestrial network (NTN) access, comprising:

memory storing instructions;
at least one processor; and
at least one transceiver, and
wherein the instructions, when executed by the at least one processor, cause the satellite to:

receive, from a network apparatus through the at least one transceiver, a message for indicating deactivation of the satellite; and
in response to the message, deactivate at least one of components of the satellite, and
wherein the deactivation of the satellite is associated with a specific area and a specific time.

15. The apparatus of claim 14,
wherein the message includes at least one of information on a cell to be deactivated, information on a data radio bearer (DRB) to be deactivated, information on a signaling radio bearer (SRB) to be deactivated, information on a distributed unit (DU) to be deactivated, or information on a frequency band to be deactivated.

FIG. 1

200

235

AMF/UPF

NG

120

gNB 223

NTN Gateway

feeder link

221

NTN Payload

Service link

NR Uu

UE

110

FIG. 2A

FIG. 2B

FIG. 3A

FIG. 3B

Radio Frame (414)

Slot (406)

$N_{sw}$ Subcarriers (404)

$N_{sc}^{RB}$ Subcarriers (410)

Resource Element (412)

Resource Block (408)

$N_{symb}$ OFDM Symbols (402)

FIG. 4

FIG. 5

FIG. 6A

FIG. 6B

FIG. 7

FIG. 8

FIG. 9A

RLC

MAC

PHY

910

gNB-DU(Satellite)

RRC

PDCP

920

gNB-CU (TN)

INDICATION (903)

FIG. 9B

640

AMF

620

NTN-Satellite (gNB)

1001

IDENTIFY SATELLITES
CORRESPONDING
TO SECTOR

1003

IDENTIFY SATELLITE
BASED ON PREDICTION
INFORMATION

TRANSMIT CONTROL SIGNAL

1005

FIG. 10

620

640

NTN-Satellite (gNB)

AMF

REQUEST Message 1101

RESPONSE Message 1103

FIG. 11A

RLC

MAC

PHY

1110

gNB-DU(Satellite)

RRC

PDCP

1120

gNB-CU (TN)

REQUEST Message 1151

RESPONSE Message 1153

FIG. 11B

620
1220

gNB #1 (Satellite)    gNB #2 (TN)

1201 {
(1) HANDOVER REQUEST
(2) CELL ACTIVATION REQUEST
(3) XN SETUP REQUEST
(4) NG-RAN NODE CONFIGURATION UPDATE
(5) S-NODE ADDITION REQUEST
(6) S-NODE MODIFICATION REQUEST
(7) S-NODE MODIFICATION REQUIRED

1203 {
(1) HANDOVER RESPONSE
(2) CELL ACTIVATION RESPONSE
(3) XN SETUP RESPONSE
(4) NG-RAN NODE CONFIGURATION UPDATE
    ACKNOWLEDGE
(5) S-NODE ADDITION RESPONSE
(6) S-NODE MODIFICATION RESPONSE
(7) S-NODE MODIFICATION CONFIRM

FIG. 12

620

TRANSCEIVER (1301)

PROCESSOR (1303)

MEMORY (1305)

FIG. 13

610

PROCESSOR (1401)

MEMORY (1403)

TRANSCEIVER (1405)

FIG. 14